# EUROPEAN PATENT APPLICATION

(11) **EP 2 223 959 A1**
(43) Date of publication of application: **01.09.2010**
(21) Application number: 08857556.8
(22) Date of filing: 08.12.2008
(51) Int. Cl.: C08L 15/00, B60C 1/00, C08K 3/04, C08K 3/36

(54) **TIRE**

(30) Priority: 07.12.2007 JP 2007317227; 29.08.2008 JP 2008221150
(71) Applicant: Bridgestone Corporation, Tokyo 104-8340 (JP)
(72) Inventor: KIMURA, Takumi, Kodaira-shi Tokyo 187-8531 (JP); ISHIKAWA, Satoshi, Kodaira-shi Tokyo 187-8531 (JP)
(74) Representative: Lamb, Martin John Carstairs
(86) International application number: PCT/JP2008/072264
(87) International publication number: WO 2009/072650

(57) **Abstract**

Provided is a tire using a rubber composition, in which: the rubber composition contains a rubber component and a filler; the rubber component contains (A) a modified conjugated diene polymer and (B) a modified conjugated diene-aromatic vinyl copolymer; a modifying agent used for each of the component (A) and the component (B) includes (C) a hydrocarbyloxysilane compound containing a nitrogen atom and a silicon atom or (D) a hydrocarbyloxysilane compound containing a silicon atom; a combination of an unmodified conjugated diene polymer and the modifying agent, and a combination of an unmodified conjugated diene-aromatic vinyl copolymer and the modifying agent include any one of the following items 1 to 3: 1: the conjugated diene polymer and the component (C), and the conjugated diene-aromatic vinyl copolymer and the component (D); 2: the conjugated diene polymer and the component (D), and the conjugated diene-aromatic vinyl copolymer and the component (C); and 3: the conjugated diene polymer and the component (C), and the conjugated diene-aromatic vinyl copolymer and the component (C); and the filler contains silica and carbon black at a mass ratio of 10:90 to 80:20, the tire having good low fuel consumption, good on-ice performance, good wet performance, and good dry performance.

## Description

### Technical Field

The present invention relates to a tire, or especially pneumatic tire, being excellent in low fuel consumption and on-ice performance, and having good handling stability on each of a wet road surface and a dry road surface.

### Background Art

In recent years, with the advent of social demands for energy savings, a request for a reduction in fuel consumption of automobiles has been becoming more and more stringent. In order that tire performance may also be ready for such request, a reduction in rolling resistance has been requested. Although an investigation has been conducted on an approach based on the optimization of a tire structure as an approach to reducing the rolling resistance of a tire, the use of a material that generates heat in a reduced quantity as a rubber composition has been adopted as the most general approach.
Numerous technologies for improving the dispersibility of a filler to be used in a rubber composition have been heretofore developed for obtaining such rubber composition that generates heat in a small quantity. Of those, in particular, a method involving modifying a polymerization active site of a diene-based polymer obtained by anionic polymerization using a lithium compound with a functional group that has an interaction with the filler has become most general.
A method involving using carbon black as the filler and modifying the polymerization active site with a tin compound (see, for example, Patent Document 1), a method involving using carbon black as in the foregoing and introducing an amino group into a polymerization active end (see, for example, Patent Document 2), or the like has been known as the most representative one of any such method as described above.

Meanwhile, in association with a growing interest in the safety of automobiles in recent years, there has been a growing request for handling stability, or especially braking and driving performance typified by handling stability on a wet road surface (hereinafter referred to as "wet performance") and handling stability on a dry road surface (hereinafter referred to as "dry performance") as well as low fuel consumption. Accordingly, requests for the performance of the rubber composition of a tire tread are not limited to a mere reduction in rolling resistance, and a rubber composition that satisfies the wet performance, the dry performance, and low fuel consumption to a high degree has been needed.
A method involving the use of silica instead of carbon black, which is a reinforcing filler that has been generally used heretofore, has already been employed as a method of obtaining a rubber composition that imparts such good low fuel consumption and good wet performance simultaneously to a tire.
In addition, an approach to reducing rigidity in a low temperature region (the term "low temperature region" as used herein refers to temperatures at the time of driving on ice, and the temperatures are about -20 to 0°C) has been adopted for improving on-ice performance, and a natural rubber, high cis-polybutadiene, or the like having a glass transition temperature of -60°C or less is used in a rubber component for use in a tread. In particular, the high cis-polybutadiene has a low glass transition temperature, and the on-ice performance is improved by increasing the ratio of the high cis-polybutadiene in the rubber component. However, the increase involves the following problem. That is, rigidity in a room temperature region also tends to reduce and dry performance tends to reduce in association with the reduction. The tendency becomes more remarkable as the ratio at which silica is blended increases. In addition, when silica and the high cis-polybutadiene are mixed, the following problem arises. That is, workability is poor and it is difficult to improve the dynamic performance of a composition unlike carbon black.

In view of the foregoing, the use of not only carbon black or silica alone but also a combination of silica and carbon black as a reinforcing filler, and an active site-modified polymer which has a wide variety of interactions with such assorted fillers and which can impart good dispersibility of a filler and the abrasion resistance of a rubber composition have been needed in order that rubber compositions each having good heat generating property may be obtained with good productivity.

In view of the foregoing, a modified polymer obtained by introducing an alkoxysilane having a dialkylamino group into an active end of a polymer obtained by an anionic polymerization involving the use of an alkyllithium or lithium amide as a polymerization initiator has been disclosed (see, for example, Patent Document 3). When the modified polymer is used, not only good workability but also reinforcing property against the blending of silica, and a certain dispersing effect on both silica and carbon black can be obtained. However, it cannot always be said that the polymer is able to satisfy them sufficiently.
In addition, it has been known that increasing the blending amount of a reinforcing filler such as carbon suffices for an improvement in dry performance. In this case, however, low fuel consumption and on-ice performance reduce.

Patent Document 1: JP 05-87630 B
Patent Document 2: JP 62-207342 A
Patent Document 3: JP 06-57767 B

### Disclosure of the Invention

Under such circumstances, an object of the present invention is to provide a tire having good low fuel consumption, good on-ice performance, good wet performance, and good dry performance.

The inventors of the present invention have made extensive studies to achieve the object. As a result, the inventors have found that the object can be achieved by using a rubber composition containing the following rubber component and filler in a tire. That is, the rubber component contains a specific modified conjugated diene polymer and a specific modified conjugated diene-aromatic vinyl copolymer. A modifying agent used for each of the polymer and the copolymer is a specific hydrocarbyloxysilane compound containing a nitrogen atom and a silicon atom or a specific hydrocarbyloxysilane compound containing a silicon atom. A combination of an unmodified conjugated diene polymer and a modifying agent for the polymer, and a combination of an unmodified conjugated diene-aromatic vinyl copolymer and a modifying agent for the copolymer are each a specific one. The filler contains silica and carbon black at a specific ratio. The present invention has been completed on the basis of such finding.

That is, the present invention provides:
[1] a tire using a rubber composition, inwhich: the rubber composition contains a rubber component and a filler; the rubber component contains (A) a modified conjugated diene polymer and (B) a modified conjugated diene-aromatic vinyl copolymer; a modifying agent used for each of the component (A) and the component (B) includes (C) a hydrocarbyloxysilane compound containing a nitrogen atom and a silicon atom or (D) a hydrocarbyloxysilane compound containing a silicon atom; a combination of an unmodified conjugated diene polymer and the modifying agent, and a combination of an unmodified conjugated diene-aromatic vinyl copolymer and the modifying agent include any one of the following items 1 to 3: 1: the conjugated diene polymer and the component (C), and the conjugated diene-aromatic vinyl copolymer and the component (D); 2: the conjugated diene polymer and the component (D), and the conjugated diene-aromatic vinyl copolymer and the component (C); and 3: the conjugated diene polymer and the component (C), and the conjugated diene-aromatic vinyl copolymer and the component (C); and the filler contains silica and carbon black at a mass ratio of 10:90 to 80:20;
[2] the tire according to the item [1], in which the modified conjugated diene polymer as the component (A) and the modified conjugated diene-aromatic vinyl copolymer as the component (B) are each obtained by causing the hydrocarbyloxysilane compound as the component (C) or (D) as a modifying agent to react with an active end of a conjugated diene polymer, or conjugated diene-aromatic vinyl copolymer, having the active end obtained by anionic polymerization of a conjugated diene compound alone, or the conjugated diene compound and an aromatic vinyl compound, in an organic solvent with an organic alkali metal compound as an initiator;
[3] the tire according to the item [1], in which the modified conjugated diene polymer as the component (A) is obtained by causing the hydrocarbyloxysilane compound as the component (C) or (D) as a modifying agent to react with an active end of a conjugated diene polymer having the active end and a cis-1, 4-bond content in a conjugated diene portion of its main chain of 90 mol% or more, the conjugated diene polymer being obtained by coordination anionic polymerization of a conjugated diene compound alone or the conjugated diene compound and another conjugated diene compound in an organic solvent with a catalyst containing a lanthanum series rare earth element-containing compound;
[4] the tire according to the item [2] or [3], in which the conjugated diene compound includes at least one kind selected from 1, 3-butadiene, isoprene, and 2,3-dimethyl-1,3-butadiene;
[5] the tire according to the item [2], in which the aromatic vinyl compound includes styrene;
[6] the tire according to any one of the items [2] to [5], in which the conjugated diene polymer includes a polybutadiene rubber (BR) and the conjugated diene-aromatic vinyl copolymer includes a styrene-butadiene rubber (SBR);
[7] the tire according to any one of the items [1] to [6], in which a content of a polymer unit of the aromatic vinyl compound is 5 to 55 mass% of the conjugated diene-aromatic vinyl copolymer and a content of a vinyl bond in the conjugated diene polymer is 7 to 65 mass% of a polymer unit of the conjugated diene;
[8] the tire according to any one of the items [1] to [7], in which the hydrocarbyloxysilane compound as the component (C) includes at least one kind selected from a hydrocarbyloxysilane compound represented by the following general formula (I) and a partial condensation product of the compound: 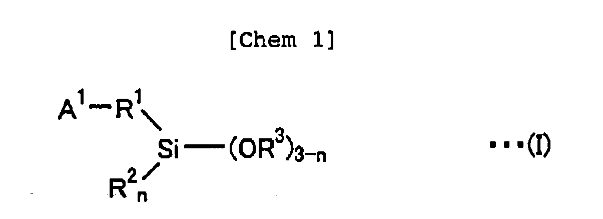 where: A¹ represents a monovalent group having at least one kind of functional group selected from a cyclic tertiary amino group, a non-cyclic tertiary amino group, an isocyanate group, a thioisocyanate group, an imino group, and a pyridine residue; R¹ represents a single bond or a divalent inactive hydrocarbon group; R² and R³ each independently represent a monovalent aliphatic hydrocarbon group having 1 to 20 carbon atoms or a monovalent aromatic hydrocarbon group having 6 to 18 carbon atoms; n represents an integer of 0 to 2; when a plurality of OR³'s are present, the plurality of OR³'s may be identical to or different from each other; and each molecule is free of an active proton and an onium salt;
[9] the tire according to any one of the items [1] to [8], in which the hydrocarbyloxysilane compound as the component (D) includes at least one kind selected from a hydrocarbyloxysilane compound represented by the following general formula (II) and a partial condensation product of the compound:
   [Chem 2]

      R⁴ₚ-Si-(OR⁵)₄₋ₚ (II)
   where: R⁴ and R⁵ each independently represent a monovalent aliphatic hydrocarbon group having 1 to 20 carbon atoms or a monovalent aromatic hydrocarbon group having 6 to 18 carbon atoms; p represents an integer of 0 to 2; when a plurality of OR⁵'s are present, the plurality of OR⁵'s may be identical to or different from each other; and each molecule is free of an active proton and an onium salt, and a hydrocarbyloxysilane compound represented by the following general formula (III) and a partial condensation product of the compound: 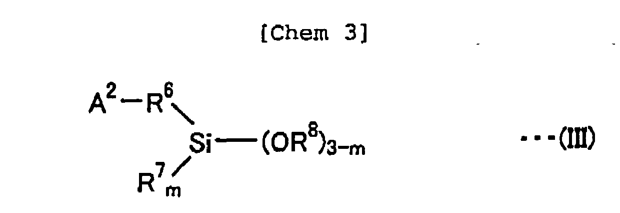 where: A² represents a monovalent group having at least one kind of functional group selected from an epoxy group, a thioepoxy group, a ketone group, a thioketone group, an aldehyde group, a thioaldehyde group, a trihydrocarbyl isocyanurate residue, a carboxylic acid ester residue, a thiocarboxylic acid ester residue, a carboxylic anhydride residue, a carboxylic halide residue, and a dihydrocarbyl carbonate residue; R⁶ represents a single bond or a divalent inactive hydrocarbon group; R⁷ and R⁸ each independently represent a monovalent aliphatic hydrocarbon group having 1 to 20 carbon atoms or a monovalent aromatic hydrocarbon group having 6 to 18 carbon atoms; m represents an integer of 0 to 2; when a plurality of OR⁸'s are present, the plurality of OR⁸'s may be identical to or different from each other; and each molecule is free of an active proton and an onium salt;
[10] the tire according to any one of the items [1] to 9 [7] and [9], in which the hydrocarbyloxysilane compound as the component (C) includes a compound containing a protected primary amino group and a bifunctional silicon atom in which one hydrocarbyloxy group and a reactive group containing one hydrocarbyloxy group are bonded to the same silicon atom in any one of its molecules;
[11] the tire according to the item [10], in which the compound containing a bifunctional silicon atom includes at least one kind selected from a silicon compound represented by the general formula (IV): 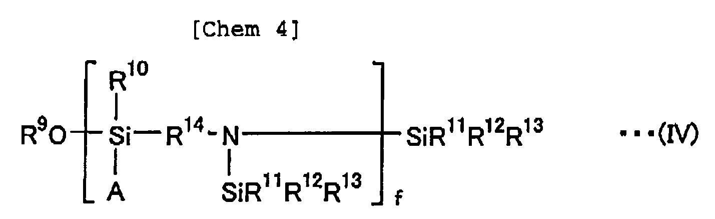 where R⁹ and R¹⁰ each independently represent a hydrocarbon group having 1 to 20 carbon atoms, R¹¹ to R¹³ each independently represent a hydrocarbon group having 1 to 20 carbon atoms, R¹⁴ represents an alkylene group having 1 to 12 carbon atoms, A represents a reactive group, and f represents an integer of 1 to 10, a silicon compound represented by the general formula (V): 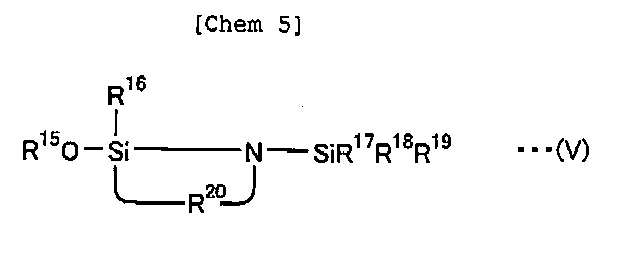 where R¹⁵ to R¹⁹ each independently represent a hydrocarbon group having 1 to 20 carbon atoms, and R²⁰ represents an alkylene group having 1 to 12 carbon atoms, and a silicon compound represented by the general formula (VI): 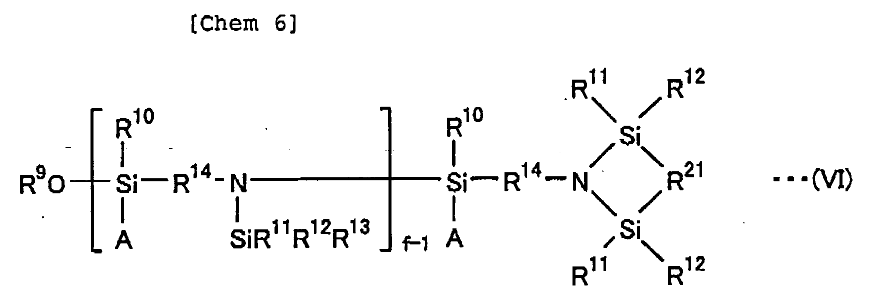 where R⁹ and R¹⁰ each independently represent a hydrocarbon group having 1 to 20 carbon atoms, R¹¹ to R¹³ each independently represent a hydrocarbon group having 1 to 20 carbon atoms, R¹⁴ represents an alkylene group having 1 to 12 carbon atoms, R²¹ represents an alkylene group having 1 to 12 carbon atoms, A represents a reactive group, and f represents an integer of 1 to 10;
[12] the tire according to the item [11], in which A in the general formula (IV) represents a halogen atom or an alkoxy group having 1 to 20 carbon atoms;
[13] the tire according to any one of the items [2] to [12], in which the components (A) and (B) are each obtained by causing the hydrocarbyloxysilane compound as the component (C) or (D) as a modifying agent to react with the active end of the conjugated diene polymer or the conjugated diene-aromatic vinyl copolymer to carry out a modification reaction and subjecting the resultant to a condensation reaction in the presence of a condensation-accelerating agent formed of a compound of an element belonging to any one of Groups 3, 4, 5, 12, 13, 14, and 15 of the periodic table (long-period type);
[14] the tire according to the item [13], in which the condensation-accelerating agent is formed of a compound of titanium (Ti), zirconium (Zr), bismuth (Bi), or aluminum (A1), and the compound of which the condensation-accelerating agent is formed includes an alkoxide, carboxylate, or acetylacetonato complex salt of the element;
[15] the tire according to the item [14], in which the condensation-accelerating agent includes at least one kind of titanium-based condensation-accelerating agent selected from an alkoxide, carboxylate, and acetylacetonato complex salt of titanium, or a mixed salt thereof;
[16] the tire according to the item [15], in which the components (A) and (B) are each obtained by causing a compound containing a protected primary amino group and a bifunctional silicon atom in which one hydrocarbyloxy group and a reactive group containing one hydrocarbyloxy group are bonded to the same silicon atom in any one of its molecules to react with a modified active end of the conjugated diene polymer or conjugated diene-aromatic vinyl copolymer having the active end to carry out modification and subjecting the resultant to a condensation reaction in which the bifunctional silicon compound is involved in the presence of a titanium-based condensation-accelerating agent;
[17] the tire according to the item [16], in which the components (A) and (B) are each such that a group derived from the compound containing a bifunctional silicon atom obtained by bonding the compound to the active end of the conjugated diene polymer or the conjugated diene-aromatic vinyl copolymer is further subjected to a hydrolysis treatment so that the protected primary amino group in the group is converted into a free amino group;
[18] the tire according to any one of the items [1] to [17], in which a total blending amount of (A) the modified conjugated diene polymer and (B) the modified conjugated diene-aromatic vinyl copolymer accounts for 15 to 100 mass% of the rubber component and a blending ratio between the components (A) and (B) is 10:90 to 90:10 in terms of a mass ratio;
[19] the tire according to any one of the items [1] to [18], in which the rubber composition contains silica and carbon black in a total amount of 20 to 120 parts by mass with respect to 100 parts by mass of the rubber component containing (A) the modified conjugated diene polymer and (B) the modified conjugated diene-aromatic vinyl copolymer at a total content of 15 mass% or more, and a content ratio between silica and carbon black is 20:80 to 70:30 in terms of a mass ratio;
[20] the tire according to any one of the items [1] to [19], in which the rubber component includes (A) the modified conjugated diene polymer and (B) the modified conjugated diene-aromatic vinyl copolymer at a total content of 15 to 100 mass% and at least one kind selected from a natural rubber, a synthetic isoprene rubber, a butadiene rubber, a styrene-butadiene rubber, an ethylene-α-olefin copolymer rubber, an ethylene-α-olefin-diene copolymer rubber, a chloroprene rubber, a halogenated butyl rubber, and a styrene-isobutylene copolymer having a halomethyl group at a content of 85 to 0 mass%; and
[21] a pneumatic tire employing the rubber composition according to any one of the items [1] to [20] for a tread.

According to the present invention, the use of a rubber composition obtained by blending a specific modified conjugated diene polymer and a specific modified conjugated diene-aromatic vinyl copolymer, and carbon black and silica at predetermined ratios each can provide a tire, or especially pneumatic tire, having good low fuel consumption, good on-ice performance, good wet performance, and good dry performance.

### Best Mode for carrying out the Invention

### [Rubber composition]

A rubber composition according to the present invention must contain a rubber component and a filler, and (A) a modified conjugated diene polymer and (B) a modified conjugated diene-aromatic vinyl copolymer must be incorporated into the rubber composition.
It is important that any one of (C) a hydrocarbyloxysilane compound containing a nitrogen atom and a silicon atom, the compound having an effect on the dispersibility of each of silica and carbon black in the rubber component, and (D) a hydrocarbyloxysilane compound containing a silicon atom, the compound having an effect particularly on the dispersibility of silica, be used in combination as a modifying agent used for the production of the above components (A) and (B).
A combination of an unmodified conjugated diene polymer and the modifying agent, and a combination of an unmodified conjugated diene-aromatic vinyl copolymer and the modifying agent must be any one of: 1: the conjugated diene polymer and the component (C), and the conjugated diene-aromatic vinyl copolymer and the component (D); 2: the conjugated diene polymer and the component (D), and the conjugated diene-aromatic vinyl copolymer and the component (C); and 3: the conjugated diene polymer and the component (C), and the conjugated diene-aromatic vinyl copolymer and the component (C). One of the components (A) and (B) in the rubber component must be modified with the component (C) or (D), and each of both the components (A) and (B) is preferably modified with the component (C).
Further, the rubber composition according to the present invention must contain silica that improves wet performance, on-ice performance, and the like and carbon black that improves dry performance at a mass ratio of 10:90 to 80:20 as the filler.
As described above, an effect of the present invention can be exerted by incorporating (A) the modified conjugated diene polymer and (B) the modified conjugated diene-aromatic vinyl copolymer as the rubber component and by incorporating silica and carbon black at a specific ratio as the filler.

### (Rubber component)

It is desirable to use the following rubber component. That is, the rubber component contains (A) the modified conjugated diene polymer and (B) the modified conjugated diene-aromatic vinyl copolymer at a total content of preferably 15 mass% or more, more preferably 25 mass% or more, or still more preferably 30 to 70 mass%, and a blending ratio between the above components (A) and (B) is preferably 10:90 to 90:10, more preferably 25:75 to 75:25, or still more preferably 40:60 to 60:40 in terms of a mass ratio.
The use of such rubber component in a rubber composition for a tread can provide a tire having good low fuel consumption, good on-ice performance, good wet performance, and good dry performance.
(A) The modified conjugated diene polymer and (B) the modified conj ugated diene-aromatic vinyl copolymer can be obtained by causing one of (C) the hydrocarbyloxysilane compound containing a nitrogen atom and a silicon atom and (D) the hydrocarbyloxysilane compound containing a silicon atom to react with an active end of a conjugated diene polymer and an active end of a conjugated diene-aromatic vinyl copolymer. Those each obtained by causing the component (C) to react are particularly suitable.

<Conjugated diene polymer and conjugated diene-aromatic vinyl copolymer>
The conjugated diene polymer to be used in the modification may be a single conjugated diene compound or may be a copolymer with another conjugated diene compound.
The conjugated diene compound described above includes, for example, 1,3-butadiene, isoprene, 1,3-pentadiene, 2,3-dimethyl-1,3-butadiene, 2-phenyl-1,3-butadiene, 1, 3-hexadiene and the like. They may be used alone or in combination of two or more kinds thereof. Of those, 1, 3-butadiene is particularly preferred.
Further, the aromatic vinyl compound used in the conjugated diene-aromatic vinyl copolymer includes, for example, styrene, α-methylstyrene, 1-vinylnaphthalene, 3-vinyltoluene, ethylvinylbenzene, divinylbenzene, 4-cyclohexylstyrene, and 2,4,6-trimethylstyrene. They may be used alone or in combination of two or more kinds thereof. Of those, styrene is particularly preferred.
As the conjugated diene polymer, polybutadiene is preferred, and as the conjugated diene-aromatic vinyl copolymer, a styrene-butadiene copolymer is preferred.

In order that (C) the hydrocarbyloxysilane compound containing a nitrogen atom and a silicon atom or (D) the hydrocarbyloxysilane compound containing a silicon atom may be caused to react with the active end of each of the conjugated diene polymer and the conjugated diene-aromatic vinyl copolymer to modify the active end, at least 10% of the polymer chain of each of the conjugated diene polymer and the conjugated diene-aromatic vinyl copolymer preferably has living property or pseudo-living property. Apolymerization reaction having such living property is, for example, a reaction in which a conjugated diene compound alone is, or the conjugated diene compound and an aromatic vinyl compound are, subjected to anionic polymerization in an organic solvent with an organic alkali metal compound as an initiator, or a reaction in which the conjugated diene compound is subjected to coordination anionic polymerization in an organic solvent with a catalyst containing a lanthanum series rare earth element compound. The former can provide a product having a higher vinyl bond content in a conjugated diene portion than that provided by the latter. Increasing a vinyl bond amount can improve heat resistance. Meanwhile, the latter provides a product having a cis-1,4-bond content in a conjugated diene portion of its main chain of 90 mol% or more, and hence can be preferably employed for improving low fuel consumption and on-ice performance.

An organic lithium compound is preferably used as the organic alkali metal compound to be used as the initiator for the anionic polymerization described above. No particular limitation is imposed on the organic lithium compound, and a hydrocarbyllithium and a lithium amide compound are preferably used. When the hydrocarbyllithium is used, a conjugated diene polymer and a conjugated diene-aromatic vinyl copolymer each having a hydrocarbyl group at a polymerization-initiating end and a polymerization active site at the other end are produced. Further, when the lithium amide compound is used, a conjugated diene polymer and a conjugated diene-aromatic vinyl copolymer each having a nitrogen-containing group at a polymerization-initiating end and a polymerization active site at the other end are produced.

The hydrocarbyllithium is preferably a compound having a hydrocarbyl group having 2 to 20 carbon atoms. Examples thereof include ethyllithium, n-propyllithium, isopropyllithium, n-butyllithium, sec-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, and a reaction product of diisopropenylbenzene with butyllithium. Of those, n-butyllithium is particularly suited.

On the other hand, the lithium amide compound includes, for example, lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, and lithium methylphenethylamide. of those, cyclic lithium amides such as lithium hexamethyleneimide, lithium pyrrolidide, lithium piperidide, lithium heptamethyleneimide, and lithium dodecamethyleneimide are preferred in terms of interaction with carbon black and polymerization initiating ability. Particularly suited are lithium hexamethyleneimide and lithium pyrrolidide.
Generally, those lithium amide compounds for use in polymerization may be prepared in advance from a secondary amine and a lithium compound. Alternatively, the amide compounds may also be prepared in the polymerization system (in-situ). The use amount of the polymerization initiator is preferably selected in the range of 0.2 to 20 mmol per 100 g of the monomer.

No particular limitation is imposed on the method of producing a conjugated diene polymer and a conj ugated diene-aromatic vinyl copolymer through anionic polymerization employing the organic lithium compound described above serving as a polymerization initiator, and any conventionally known methods may be employed.
Specifically, in an organic solvent which is inert to the reaction such as a hydrocarbon-based solvent including aliphatic, alicyclic, and aromatic hydrocarbon compounds, a conjugated diene compound or a mixture of a conjugated diene compound and an aromatic vinyl compound is anionically polymerized in the presence of the lithium compound described above serving as a polymerization initiator and an optional randomizer, thereby producing a conjugated diene polymer and a conjugated diene-aromatic vinyl copolymer of interest each having an active end.
In addition, in the case where the organic lithium compound is used as the polymerization initiator, not only the conjugated diene polymer having an active end but also the conjugated diene-aromatic vinyl copolymer having an active end can be obtained with higher efficiency than that in the case where the catalyst containing a lanthanum series rare earth element compound is used.

The hydrocarbon-based solvent described above is preferably a hydrocarbon having 3 to 8 carbon atoms. Examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexane, 2-hexene, benzene, toluene, xylene, andethylbenzene. They may be used alone or in combination of two or more kinds thereof.
In addition, a monomer concentration in the solvent is preferably 5 to 50 mass%, or more preferably 10 to 30 mass%. It should be noted that, when copolymerization is carried out with the conjugated diene compound and the aromatic vinyl compound, the content of the aromatic vinyl compound in a mixture of the loaded monomers is preferably 5 to 55 mass%, or more preferably 15 to 45 mass%.

Further, the randomizer, which may be used in accordance with needs, is a compound which is capable of controlling a microstructure of a conjugated diene polymer and a conjugated diene-aromatic vinyl copolymer such as increasing 1,2-bonds of the butadiene moieties in a butadiene-styrene copolymer or 3,4-bonds in an isoprene polymer or controlling the monomer unit composition distribution in a conjugated diene compound-aromatic vinyl compound copolymer such as randomizing butadiene units and styrene units in a butadiene-styrene copolymer. No particular limitation is imposed on the type of randomizer, and any of known compounds conventionally used as a randomizer may appropriately employed. Specific examples of the randomizer include ethers and tertiary amines such as dimethoxybenzene, tetrahydrofuran, dimethoxyethane, diethylene glycol dibutyl ether, diethylene glycol dimethyl ether, 2,2-bis(2-tetrahydrofuryl)-propanel, triethylamine, pyridine, N-methylmorpholine, N,N,N',N'-tetramethylethylenediamine, and 1,2-piperidinoethane. Further, potassium salts such as potassium t-amylate and potassium t-butoxide and sodium salts such as sodium t-amylate may also be employed.

Those randomizers may be used alone or in combination of two or more kinds thereof. The use amount of the randomizer is preferably selected in the range of 0.01 to 1000 mole equivalents per mole of the lithium compound.
The temperature of the polymerization reaction is preferably selected in the range of 0 to 150°C, or more preferably 20 to 130°C. The polymerization reaction may be carried out under generated pressure, but generally desirably performed under such pressure that the monomer is maintained virtually as a liquid phase. That is, a higher pressure may be employed in accordance with needs, although depending on the individual substances to be polymerized, polymerization solvent, and polymerization temperature. Such pressure may be obtained through an appropriate method such as applying pressure to a reactor by use of gas inert to the polymerization reaction.

Next, the polymerization catalyst containing a lanthanum series rare earth element compound is preferably obtained by combining at least one kind of compound selected from the following component (x), at least one kind of compound selected from the following component (y), and at least one kind of compound selected from the following component (z).

### [Component (x)]

The component is a rare earth compound selected from the following items (x1) to (x4), and may be used as it is as a solution in an inert organic solvent, or may be used after an inert solid has been caused to carry the component on itself:
(x1) a rare earth compound having an oxidation number of 3 and having a total of three ligands freely selected from a carboxyl group having 2 to 30 carbon atoms, an alkoxy group having 2 to 30 carbon atoms, an aryloxy group having 6 to 30 carbon atoms, and a 1,3-dicarbonyl-containing group having 5 to 30 carbon atoms, or a complex compound of the compound and a Lewis base compound (selected especially from, for example, a free carboxylic acid, a free alcohol, a 1,3-diketone, a cyclic ether, a linear ether, a trihydrocarbyl phosphine, and a trihydrocarbyl phosphite), or specifically, neodymium tri-2-ethylhexanoate or a complex compound of neodymium tri-2-ethylhexanoate and acetylacetone, neodymium trineodecanoate or a complex compound of neodymium trineodecanoate and acetylacetone, or neodymium tri-n-butoxide;
(x2) a complex compound of a trihalide of a rare earth and a Lewis base such as a THF complex of neodymium trichloride;
(x3) an organic rare earth compound having an oxidation number of 3 in which at least one (substituted) allyl group is directly bonded to a rare earth atom such as a salt of tetraallyl neodymium and lithium; and
(x4) an organic rare earth compound having an oxidation number of 2 or 3 in which at least one (substituted) cyclopentadienyl group is directly bonded to a rare earth atom, or a product of a reaction between the compound and a trialkylaluminum or an ionic compound formed of a non-coordinating anion and a counter cation such as dimethylaluminum (µ-dimethyl)bis(pentamethylcyclopentadienyl) samarium.
The rare earth elements of the above rare earth compounds are preferably lanthanum, neodymium, praseodymium, samarium, and gadolinium, or more preferably lanthanum, neodymium, and samarium.
Of the above component (x), a carboxylate of neodymium and a substituted cyclopentadienyl compound of samarium are preferred.

### [Component (y)]

The component is at least one kind of organic aluminum compound selected from any one of the following items, and a plurality of compounds can be simultaneously used:
(y1) a trihydrocarbyl aluminum compound represented by a formula R²²₃A1 (provided that R²²'s each represent a hydrocarbon group having 1 to 30 carbon atoms, and may be identical to or different from each other);
(y2) a hydrocarbyl aluminum hydride represented by a formula R²³₂AlII or R²³AlII₂ (provided that R²³'s each represent a hydrocarbon group having 1 to 30 carbon atoms, and may be identical to or different from each other); and
(y3) a hydrocarbyl aluminoxane compound having a hydrocarbon group having 1 to 30 carbon atoms.
Examples of the above component (y) include a trialkylaluminum, a dialkylaluminum dihydride, an alkylaluminum hydride, and an alkyl aluminoxane. Those compounds may be used as a mixture. Of the component (y), an aluminoxane and any other organic aluminum compound are preferably used in combination.

### [Component (z)]

The component is a compound selected from any one of the following items, but is not necessarily needed when the component (x) contains a halogen or a non-coordinating anion and when the component (y) contains an aluminoxane:
(z1) a hydrolyzable inorganic or organic compound of an element belonging to Groups 2 and 12 to 14 of the periodic table (long-period type) having a halogen, or a complex compound of the compound and a Lewis base such as an alkylaluminum dichloride, a dialkylaluminum chloride, silicon tetrachloride, tin tetrachloride, a complex of zinc chloride and a Lewis base such as an alcohol, or a complex of magnesium chloride and a Lewis base such as an alcohol;
(z2) an organic halide having at least one structure selected from a tertiary alkyl halide, benzyl halide, and an aryl halide such as benzyl chloride, t-butyl chloride, benzyl bromide, or t-butyl bromide;
(z3) a zinc halide or a complex compound of the halide and a Lewis base; and
(z4) an ionic compound formed of a non-coordinating anion and a counter cation (for example, triphenylcarbonium tetrakis(pentafluorophenyl)borate is preferably used).

The same conjugated diene compound and/or unconjugated diene monomer as a monomer for polymerization may be preliminarily used in combination with the above components (x), (y), and (z) as required in the preparation of the above catalyst.
In addition, the component (x) or (z) may be used after an inert solid has been caused to carry part or the entirety of the component on itself. In this case, the preparation can be performed by the so-called gas phase polymerization.
Although the use amount of the above catalyst can be appropriately set, the amount of the component (x) is typically about 0.001 to 0.5 mmol per 100 g of the monomers. In addition, a mole ratio "component (y) /component (x)" is about 5 to 1000, and a mole ratio "component (z)/component (x)" is about 0.5 to 10.
The solvent used in the case of solution polymerization is an organic solvent inert to a reaction, for example, a hydrocarbon-based solvent such as an aliphatic, alicyclic, or aromatic hydrocarbon compound. To be specific, the hydrocarbon-based solvent is preferably a hydrocarbon having 3 to 8 carbon atoms. Examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. They may be used alone or in combination of two or more kinds thereof.
The temperature in the polymerization reaction is selected from the range of preferably -80 to 150°C, or more preferably -20 to 120°C. Although the polymerization reaction can be carried out under a generated pressure, it is typically desirable to carry out an operation under a pressure enough to keep each monomer substantially in a liquid phase. That is, an additionally high pressure can be used as desired, though an allowable pressure varies depending on each substance to be polymerized, a polymerization medium to be used, and the polymerization temperature. In addition, such pressure can be obtained by an appropriate method such as the pressurization of a reactor with a gas inert to the polymerization reaction.
In the polymerization, all raw materials involved in the polymerization such as the catalyst, the solvent, and the monomers are desirably used after reaction inhibitors such as water, oxygen, carbon dioxide, and a protonic compound have been substantially removed from the raw materials.

### <Modifying agent>

In the present invention, (A) the modified conjugated diene polymer and (B) the modified conjugated diene-aromatic vinyl copolymer can be produced by causing (C) the hydrocarbyloxysilane compound containing a nitrogen atom and a silicon atom or (D) the hydrocarbyloxysilane compound containing a silicon atom as a modifying agent to react with the active ends of the conjugated diene polymer and the conjugated diene-aromatic vinyl copolymer each having an active end obtained as described above.
The modifying agent is preferably the hydrocarbyloxysilane compound containing a nitrogen atom and a silicon atom in any one of its molecules as the component (C), or particularly preferably a compound containing a protected primary amino group and a bifunctional silicon atom in which one hydrocarbyloxy group and a reactive group containing one hydrocarbyloxy group are bonded to the same silicon atom in any one of its molecules.
Upon production of a primary amine-modified polymer, a primary amine-modified portion is preferably protected with a protective group (such as a trimethylsilyl group). The presence of the protective group can prevent reaction inhibition by a proton of the primary amine, and hence modification efficiency can be improved. Upon production of a secondary amine-modified polymer as well, a secondary amine-modified active portion is preferably protected with a protective group in order that reaction inhibition by a proton of the secondary amine may be prevented.

«(C) Hydrocarbyloxysilane compound-1 containing nitrogen atom and silicon atom»

As the hydrocarbyloxysilane compound as the component (C), a hydrocarbyloxysilane compound represented by the following general formula (I) and a partial condensation product of the compound can be used:

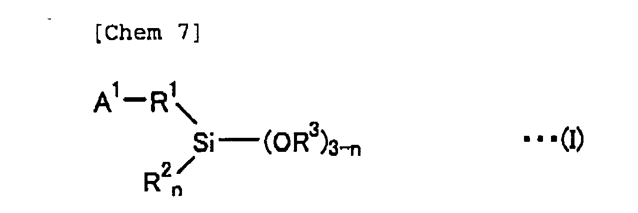

where: A¹ represents a monovalent group having at least one kind of functional group selected from a cyclic tertiary amino group, a non-cyclic tertiary amino group, an isocyanate group, a thioisocyanate group, an imino group, and a pyridine residue; R¹ represents a single bond or a divalent inactive hydrocarbon group; R² and R³ each independently represent a monovalent aliphatic hydrocarbon group having 1 to 20 carbon atoms or a monovalent aromatic hydrocarbon group having 6 to 18 carbon atoms; n represents an integer of 0 to 2; when a plurality of OR³'s are present, the plurality of OR³'s may be identical to or different from each other; and each molecule is free of an active proton and an onium salt. In the above case, the partial condensation product is a compound prepared by converting a part (not all) of SiOR in the hydrocarbyloxysilane compound to a SiOSi bond by condensation.

In the general formula (I), an imino group out of the functional groups in A¹ includes a ketimine group, an aldimine group, and an amidine group.
An alkylene group having 1 to 20 carbon atoms can preferably be listed as the divalent inactive hydrocarbon group represented by R¹. The alkylene group may be linear, branched, or cyclic, and a linear alkylene group is particularly suited. Examples of the linear alkylene group include methylene, ethylene, trimethylene, tetramethylene, pentamethylene, hexamethylene, octamethylene, decamethylene, and dodecamethylene groups.

An alkyl group having 1 to 20 carbon atoms, an alkenyl group having 2 to 18 carbon atoms, an aryl group having 6 to 18 carbon atoms, an aralkyl group having 7 to 18 carbon atoms and the like can be listed as R² and R³. In this regard, the alkyl group and the alkenyl group may be linear, branched, or cyclic, and examples thereof include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, and cyclohexenyl groups.
The aryl group may have a substituent such as a lower alkyl group on an aromatic ring, and examples thereof include phenyl, tolyl, xylyl, and naphthyl groups. Further, the aralkyl group may have a substituent such as a lower alkyl group on an aromatic ring, and examples thereof include benzyl, phenethyl, and naphthylmethyl groups.
n represents an integer of 0 to 2, or preferably 0, and it is necessary that each molecule is free of an active proton and an onium salt.

The non-cyclic tertiary amine group-containing hydrocarbyloxysilane compound out of the compounds represented by the general formula (I) includes, for example, 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminoethyl(triethoxy)silane, 2-dimethylaminoethyl(trimethoxy)silane, 3-dimethylaminopropyl(diethoxy)methylsilane, and 3-dibutylaminopropyl(triethoxy)silane. Of those, 3-diethylaminopropyl(triethoxy)silane and 3-dimethylaminopropyl(triethoxy)silane are suited.
Also, the cyclic tertiary amino group-containing hydrocarbyloxysilane compound preferably includes 3-(1-hexamethyleneimino)propyl(triethoxy)silane, 3-(1-hexamethyleneimino)propyl(trimethoxy)silane, (1-hexamethyleneimino)methyl(trimethoxy)silane, (1-hexamethyleneimino)methyl(triethoxy)silane, 2-(1-hexamethyleneimino)ethyl(triethoxy)silane, 2-(1-hexamethyleneimino)ethyl(trimethoxy)silane, 3-(1-pyrrolidinyl)propyl(triethoxy)silane, 3-(1-pyrrolidinyl)propyl(trimethoxy)silane, 3-(1-heptamethyleneimino)propyl(triethoxy)silane, 3-(1-dodecamethyleneimino)propyl(triethoxy)silane, 3-(1-hexamethyleneimino)propyl(diethoxy)methylsilane, and 3-(1-hexamethyleneimino)propyl(diethoxy)ethylsilane. In particular, 3-(1-hexamethyleneimino)propyl(triethoxy)silane is suited. Further, 2-(trimethoxysilylethyl)pyridine, 2-(triethoxysilylethyl)pyridine, 4-ethylpyridine, and the like can be listed as the other hydrocarbyloxysilane compounds.

The imino group-containing hydrocarbyloxysilane compound preferably includes N-(1,3-dimethylbutylidene)-3-(triethoxysilyl)-1-propanamine, N-(1-methylethylidene)-3-(triethoxysilyl)-1-propanamine, N-ethylidene-3-(triethoxysilyl)-1-propanamine, N-(1-methylpropylidene)-3-(triethoxysilyl)-1-propanamine, N-(4-N,N-dimethylaminobenzylidene)-3-(triethoxysilyl)-1-propan gamine, N-(cyclohexylidene)-3-(triethoxysilyl)-1-propanamine, and trimethoxysilyl compounds, methyldiethoxysilyl compounds, ethyldiethoxysilyl compounds, methyldimethoxysilyl compounds, and ethyldimethoxysilyl compounds each corresponding to the above triethoxysilyl compounds. Of those, N-(1-methylpropylidene)-3-(triethoxysilyl)-1-propanamine and N-(1,3-dimethylbutylidene)-3-(triethoxysilyl)-1-propanamine are particularly suited.

Further, the following compounds can be listed as the other hydrocarbyloxy compounds. That is, 1-[3-(triethoxysilyl)propyl]-4,5-dihydroimidazole, 1-[3-(trimethoxysilyl)propyl]-4,5-dihydroimidazole, 3-[10-(triethoxysilyl)decyl]-4-oxazoline, and the like can be listed as the imino (amidine) group-containing compound. of those, 1-[3-(triethoxysilyl)propyl]-4,5-dihydroimidazole and 1-[3-(trimethoxysilyl)propyl]-4,5-dihydroimidazole can be preferably listed. Further examples include 1-[3-(triisopropoxysilyl)propyl]-4,5-dihydroimidazole and 1-[3-(methyldiethoxysilyl)propyl]-4,5-dihydroimidazole.

Also, the isocyanate group-containing compound includes 3-isocyanatopropyltrimethoxysilane, 3-isocyanatopropyltriethoxysilane, 3-isocyanatopropylmethyldiethoxysilane, 3-isocyanatopropyltriisopropoxysilane, and the like. of those, 3-isocyanatopropyltriethoxysilane is preferred.
The above hydrocarbyloxysilane compounds may be used alone or in combination of two or more kinds thereof. Further, the partial condensation products of the hydrocarbyloxysilane compounds can be used as well.

«(D) Hydrocarbyloxysilane compound containing silicon atom»
As the hydrocarbyloxysilane compound as the component (D), a hydrocarbyloxysilane compound represented by the following general formula (II) and a partial condensation product of the compound, and a hydrocarbyloxysilane compound represented by the following general formula (III) and a partial condensation product of the compound can be used:
[Chem 8]

   R⁴ₚ-Si-(OR⁵)₄₋ₚ (II)

where: R⁴ and R⁵ each independently represent a monovalent aliphatic hydrocarbon group having 1 to 20 carbon atoms or a monovalent aromatic hydrocarbon group having 6 to 18 carbon atoms; p represents an integer of 0 to 2; when a plurality of OR⁵'s are present, the plurality of OR⁵'s may be identical to or different from each other; and each molecule is free of an active proton and an onium salt;

where: A² represents a monovalent group having at least one kind of functional group selected from an epoxy group, a thioepoxy group, a ketone group, a thioketone group, an aldehyde group, a thioaldehyde group, a trihydrocarbyl isocyanurate residue, a carboxylic acid ester residue, a thiocarboxylic acid ester residue, a carboxylic anhydride residue, a carboxylic halide residue, and a dihydrocarbyl carbonate residue; R⁶ represents a single bond or a divalent inactive hydrocarbon group; R⁷ and R⁸ each independently represent a monovalent aliphatic hydrocarbon group having 1 to 20 carbon atoms or a monovalent aromatic hydrocarbon group having 6 to 18 carbon atoms; m represents an integer of 0 to 2; when a plurality of OR⁸'s are present, the plurality of OR⁸'s may be identical to or different from each other; and each molecule is free of an active proton and an onium salt.

The hydrocarbyloxysilane compound represented by the general formula (II) includes, for example, tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, propyltriethoxysilane, butyltrimethoxysilane, phenyltrimethoxysilane, phenyltriethoxysilane, dimethyldimethoxysilane, methylphenyldimethoxysilane, vinyltrimethoxysilane, vinyltriethoxysilane, divinyldimethoxysilane, and divinyldiethoxysilane. Of those, tetraethoxysilane is particularly suited.
The above hydrocarbyloxysilane compounds (II) may be used alone or in combination of two or more kinds thereof.

The hydrocarbyloxysilane compound represented by the general formula (III) includes, for example, thioepoxy group-containing and epoxy group-containing hydrocarbyloxysilane compounds such as 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-eboxycyclohexyl)ethyltriethoxysilane, and 2-(3,4-epoxycyclohexyl)ethyl(methyl)dimethoxysilane, and compounds obtained by substituting an epoxy group in the above compounds with a thioepoxy group. Of those, 3-glycidoxypropyltrimethoxysilane and 2-(3,4-epoxycyclohexyltrimethoxysilane are particularly suited.
The above hydrocarbyloxysilane compounds may be used alone or in combination of two or more kinds thereof. Further, partial condensation products of the hydrocarbyloxysilane compounds may also be used.

«(C) Hydrocarbyloxysilane compound-2 containing nitrogen atom and silicon atom»
The modifying agent is preferably a compound containing a protected primary amino group and a bifunctional silicon atom in which one hydrocarbyloxy group and a reactive group containing one hydrocarbyloxy group are bonded to the same silicon atom in any one of its molecules. Upon production of a primary amine-modified polymer, a primary amine-modified portion is preferably protected with a protective group (such as a trimethylsilyl group). The presence of the protective group can prevent reaction inhibition by a proton of the primary amine, and hence modification efficiency can be improved. Upon production of a secondary amine-modified polymer as well, a secondary amine-modified active portion is preferably protected with a protective group in order that reaction inhibition by a proton of the secondary amine may be prevented.
The compound containing a bifunctional silicon atom includes: a silicon compound represented by a general formula (IV):

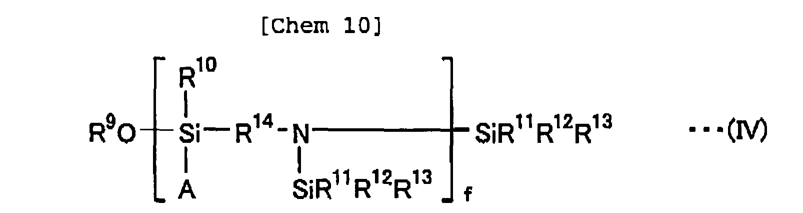

where R⁹ and R¹⁰ each independently represent a hydrocarbon group having 1 to 20 carbon atoms, R¹¹ to R¹³ each independently represent a hydrocarbon group having 1 to 20 carbon atoms, R¹⁴ represents an alkylene group having 1 to 12 carbon atoms, A represents a reactive group, and f represents an integer of 1 to 10; a silicon compound represented by a general formula (V):

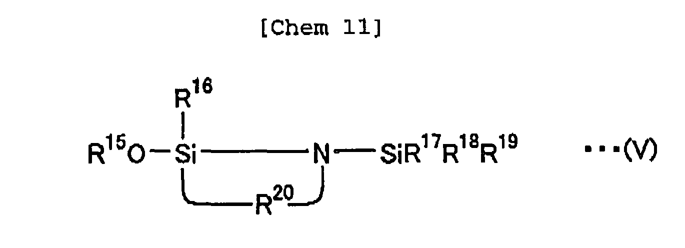

where R¹⁵ to R¹⁹ each independently represent a hydrocarbon group having 1 to 20 carbon atoms, and R²⁰ represents an alkylene group having 1 to 12 carbon atoms; and a silicon compound represented by a general formula (VI):

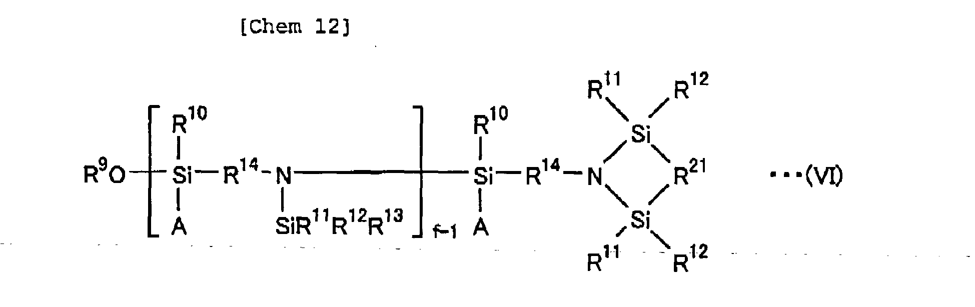

where R⁹ and R¹⁰ each independently represent a hydrocarbon group having 1 to 20 carbon atoms, R¹¹ to R¹³ each independently represent a hydrocarbon group having 1 to 20 carbon atoms, R¹⁴ represents an alkylene group having 1 to 12 carbon atoms, R²¹ represents an alkylene group having 1 to 12 carbon atoms, A represents a reactive group, and f represents an integer of 1 to 10.

In the above formulae (IV) to (VI), preferred examples of the alkylene group having 1 to 12 carbon atoms represented by R¹⁴ or R²⁰ include a methylene group, an ethylene group, and a propylene group, and examples of the hydrocarbon group having 1 to 20 carbon atoms include alkyl groups such as a methyl group, an ethyl group, and a propyl group, and aryl groups such as aralkyl groups including a phenyl group, a toluyl group, a naphthyl group, and a benzyl group.
In addition, two of R¹¹, R¹², and R¹³ in the formula (IV) may be bonded to each other to form a four- to seven-membered ring together with the silicon atom to which the groups are bonded, and two of R¹⁷, R¹⁸, and R¹⁹ in the formula (V) may similarly be bonded to each other to form a four- to seven-membered ring together with the silicon atom to which the groups are bonded. R²¹ represents an alkylene group having 1 to 12 carbon atoms.

Examples of the compound containing a bifunctional silicon atom having at least a protected primary amino group and an alkoxy group bonded to the silicon atom include N,N-bis(trimethylsilyl)aminopropylmethyldimethoxysilane, N,N-bis(trimethylsilyl)aminopropylmethyldiethoxysilane, N,N-bis(trimethylsilyl)aminoethylmethyldimethoxysilane, N,N-bis(trimethylsilyl)aminoethylmethyldiethoxysilane, and 1-trimethylsilyl-2,2-diethoxymethyl-1-aza-2-silacyclopentane.
Examples of such compounds in which A represents a halogen atom include N,N-bis(trimethylsilyl)aminopropylmethylmethoxychlorosilane, N,N-bis(trimethylsilyl)aminopropylmethylethoxychlorosilane, N,N-bis(trimethylsilyl)aminoethylmethylmethoxychlorosilane, and N,N-bis(trimethylsilyl)aminoethylmethylethoxychlorosilane.
N,N-bis(trimethylsilyl)aminopropylmethyldimethoxysilane, N,N-bis(trimethylsilyl)aminopropylmethyldiethoxysilane, and 1-trimethylsilyl-2,2-diethoxymethyl-1-aza-2-silacyclopentane are preferred.
Those modifying agents may be used alone or in combination of two or more kinds thereof. Further, each of the modifying agents may be a partial condensation product.
In the above case, the partial condensation product is a compound prepared by converting a part (not all) of SiOR in the modifying agent to a SiOSi bond by condensation.
The polymer used in the above modification reaction preferably contains at least 10% of living polymer chains.

In the above modification reaction with the modifying agent, the use amount of the modifying agent is preferably 0.5 to 200 mmol/kg (conjugated diene polymer and conjugated diene-aromatic vinyl copolymer), more preferably 1 to 100 mmol/kg (conjugated diene polymer and conjugated diene-aromatic vinyl copolymer), or particularly preferably 2 to 50 mmol/kg (conjugated diene polymer and conjugated diene-aromatic vinyl copolymer). In the unit of the amount, the "conjugated diene polymer and conjugated diene-aromatic vinyl copolymer" means the mass of polymer not containing additives such as an antioxidant added during or after the production. Through controlling the use amount of the modifying agent so as to fall within the above ranges, excellent dispersibility of fillers can be attained, and mechanical characteristics, wear resistance, and low heat generating property after vulcanization can be improved.
It should be noted that no particular limitation is imposed on the method of adding the above modifying agent, and one batch addition, divided addition, continuous addition, or the like may be employed. Of those, one batch addition is preferred.
Further, the modifying agent may be bonded to any of a polymerization-initiating end, a polymerization-terminating end, a polymer main chain, and a polymer side chain. From the viewpoint of improvement of the low heat generating property by preventing energy loss from a polymer end, the modifying agent is preferably introduced into the polymerization-initiating end or the polymerization-terminating end.

### <Condensation-accelerating agent>

In the present invention, a condensation-accelerating agent is preferably employed in order to accelerate a condensation reaction in which the alkoxysilane compound as the component (C) or component (D) serving as the modifying agent described above is involved.
A compound containing a tertiary amino group or an organic compound containing one or more kinds of elements each belonging to any one of Groups 3, 4, 5, 12, 13, 14, and 15 of the periodic table (long-period type) can be used as such condensation-accelerating agent. In addition, the condensation-accelerating agent is preferably an alkoxide, carboxylate, or acetylacetonato complex salt containing at least one kind of metal selected from the group consisting of titanium (Ti), zirconium (Zr), bismuth (Bi), or aluminum (Al).
The condensation-accelerating agent employed in the above case maybe added to the reaction systembefore the modification reaction. However, preferably, the agent is added to the modification reaction system during and/or after the modification reaction. When the agent is added before the modification reaction, in some cases, the agent directly reacts with the active end, thereby, for example, failing to introduce a hydrocarbyloxy group having a protected primary amino group to the active end.
The time at which the condensation-accelerating agent is added is generally 5 minutes to 5 hours after initiation of a condensation reaction, or preferably 15 minutes to 1 hour after initiation of a condensation reaction.

Specific examples of the condensation-accelerating agent include tetrakis(2-ethyl-1,3-hexanediolato)titanium, tetrakis(2-methyl-1,3-hexanediolato)titanium, tetrakis(2-propyl-1,3-hexanediolato)titanium, tetrakis(2-butyl-1,3-hexanediolato)titanium, tetrakis(1,3-hexanediolato)titanium, tetrakis(1,3-pentanediolato)titanium, tetrakis(2-methyl-1,3-pentanediolato)titanium, tetrakis(2-ethyl-1,3-pentanediolato)titanium, tetrakis (2-propyl-1,3-pentanediolato)titanium, tetrakis(2-butyl-1,3-pentanediolato)titanium, tetrakis(1,3-heptanediolato)titanium, tetrakis(2-methyl-1,3-heptanediolato)titanium, tetrakis(2-ethyl-1,3-heptanediolato)titanium, tetrakis(2-propyl-1,3-heptanediolato)titanium, tetrakis(2-butyl-1,3-heptanediolato)titanium, tetrakis(2-ethylhexoxy)titanium, tetramethoxytitanium, tetraethoxytitanium, tetra-n-propoxytitanium, tetraisopropoxytitanium, tetra-n-butoxytitanium, a tetra-n-butoxytitanium oligomer, tetraisobutoxytitanium, tetra-sec-butoxytitanium, tetra-tert-butoxytitanium, bis(oleato)bis(2-ethylhexanoato)titanium, titanium dipropoxybis(triethanolaminate), titanium dibutoxybis(triethanolaminate), titanium tributoxystearate, titanium tripropoxystearate, titanium tripropoxyacetylacetonate, titanium dipropoxybis(acetylacetonate), titanium tripropoxy(ethylacetoacetate), titanium propoxyacetylacetonatobis(ethylacetoacetate), titanium tributoxyacetylacetonate, titanium dibutoxybis(acetylacetonate), titanium tributoxyethylacetoacetate, titanium butoxyacetylacetonatobis(ethylacetoacetate), titanium tetrakis(acetylacetonate), titanium diacetylacetonatobis(ethylacetoacetate), bis(2-ethylhexanoato)titanium oxide, bis(laurato)titanium oxide, bis(naphthato)titanium oxide, bis(stearato)titanium oxide, bis(oleato)titanium oxide, bis(linolato)titanium oxide, tetrakis(2-ethylhexanoato)titanium, tetrakis(laurato)titanium, tetrakis(naphthato)titanium, tetrakis(stearato)titanium, tetrakis(oleato)titanium, tetrakis(linolato)titanium, titanium di-n-butoxide(bis-2,4-pentanedionate), titanium oxide bis(stearate), titanium oxide bis(tetramethylheptanedionate), titanium oxide bis(pentanedionate), and titanium tetra(lactate). Of those, tetrakis(2-ethyl-1,3-hexanediolato)titanium, tetrakis(2-ethylhexoxy)titanium, and titanium di-n-butoxide(bis-2,4-pentanedionate) are preferred.

Further, examples of the condensation-accelerating agent include tris(2-ethylhexanoato)bismuth,tris(laurato)bismuth, tris(naphthato)bismuth, tris(stearato)bismuth, tris(oleato)bismuth, tris(linolato)bismuth, tetraethoxyzirconium, tetra-n-propoxyzirconium, tetra-isopropoxyzirconium, tetra-n-butoxyzirconium, tetra-sec-butoxyzirconium, tetra-tert-butoxyzirconium, tetra(2-ethylhexyl)zirconium, zirconium tributoxystearate, zirconium tributoxyacetylacetonate, zirconium dibutoxy bis(acetylacetonate), zirconium tributoxyethylacetoacetate, zirconium butoxyacetylacetonatobis(ethylacetoacetate), zirconium tetrakis(acetylacetonate), zirconium diacetylacetonatobis(ethylacetoacetate), bis(2-ethylhexanoato)zirconiumoxide,bis(laurato)zirconiumoxide, bis(naphthato)zirconium oxide, bis(stearato)zirconium oxide, bis(oleato)zirconium oxide, bis(linolato)zirconium oxide, tetrakis(2-ethylhexanoato)zirconium, tetrakis(laurato)zirconium, tetrakis(naphthato)zirconium, tetrakis(stearato)zirconium, tetrakis(oleato)zirconium, and tetrakis(linolato)zirconium.

Further examples include triethoxyaluminum, tri-n-propoxyaluminum, triisopropoxyaluminum, tri-n-butoxyaluminum, tri-sec-butoxyaluminum, tri-tert-butoxyaluminum, tri(2-ethylhexyl) aluminum, aluminum dibutoxystearate, aluminum dibutoxyacetylacetonate, aluminum butoxybis(acetylacetonate), aluminum dibutoxyethylacetoacetate, aluminum tris (acetylacetonate), aluminum tris (ethyl acetoacetate), tris(2-ethylhexanoato)aluminum, tris(laurato)aluminum, tris(naphthato)aluminum, tris(stearato)aluminum, tris(oleato)aluminum, and tris(linolato)aluminum.

Of those condensation-accelerating agents, a titanium-based condensation-accelerating agent is preferred, and an alkoxide of titanium metal, a carboxylate of titanium metal, or an acetylacetonato complex salt of titanium metal is particularly preferred. The use amount of the condensation-accelerating agent is preferably such that the mole ratio of the compounds described above to the total amount of hydrocarbyloxy groups present in the reaction system is 0.1 to 10, or particularly preferably 0.5 to 5. Through controlling the amount of the condensation-accelerating agent so as to fall within the above range, the condensation reaction efficiently proceeds.

The condensation reaction in the present invention progresses in the presence of the above condensation-accelerating agent and steam or water. When steam is present, for example, a desolvent treatment based on steam stripping is performed, and the condensation reaction progresses during the steam stripping.
Further, the condensation reaction may be carried out in an aqueous solution at a condensation reaction temperature of preferably 85 to 180°C, more preferably 100 to 170°C, or particularly preferably 110 to 150°C.
Through controlling the temperature during the condensation reaction to fall within the above range, the condensation reaction can be efficiently completed, whereby deterioration in quality and the like of the produced modified conjugated diene polymer and conj ugated diene-aromatic vinyl copolymer because of time-dependent aging reaction of the polymers and the like can be prevented.

It should be noted that the condensation reaction time is generally about 5 minutes to 10 hours, or preferably about 15 minutes to 5 hours. Through controlling the condensation reaction time to fall within the above range, the condensation reaction can be smoothly completed.
It should be noted that the pressure of the reaction system during the condensation reaction is generally 0.01 to 20 MPa, or preferably 0.05 to 10 MPa.
No particular limitation is imposed on the mode with which the condensation reaction is performed in an aqueous solution, and a batch-type reactor may be employed. Alternatively, the reaction may be carried out in a continuous manner by means of an apparatus such as a multi-step continuous reactor. In the course of the condensation reaction, removal of a solvent may be simultaneously performed.
The primary amino group derived from the modifying agent for each of the modified conjugated diene polymer and the conjugated diene-aromatic vinyl copolymer of the present invention is produced by performing a deprotection treatment as described above. A suitable specific example of a deprotection treatment except the desolvent treatment involving the use of steam such as steam stripping described above is described in detail below.
Specifically, protective groups on the primary amino group are hydrolyzed, to thereby form a free primary amino group. Through removal of the solvent from the thus-deprotected polymer, the modified conjugated diene polymer and the conjugated diene-aromatic vinyl copolymer each having a primary amino group can be obtained. It should be noted that in any step from a step including the condensation to a step of removing solvent to produce a dried polymer, deprotection of the protected primary amino group derived from the modifying agent may be performed in accordance with needs.

<(A) Modified conjugated diene polymer and (B) modified conjugated diene-aromatic vinyl copolymer>
(A) The modified conjugated diene polymer and (B) the modified conjugated diene-aromatic vinyl copolymer which are particularly preferred can each be obtained by: causing a compound containing a protected primary amino group and a bifunctional silicon atom in which one hydrocarbyloxy group and a reactive group containing one hydrocarbyloxy group are bonded to the same silicon atom in any one of its molecules to react with a modified active end of the conjugated diene polymer or conjugated diene-aromatic vinyl copolymer having the active end to carry out modification; and subjecting the resultant to a condensation reaction in which the bifunctional silicon compound is involved in the presence of a titanium-based condensation-accelerating agent to subject the protected primary amino group derived from the modifying agent to a deprotection treatment. Those modified polymers thus obtained each improve the dispersibility of the carbon black/silica-mixed filler in the rubber component, and hence a tire having good low fuel consumption, good on-ice performance, good wet performance, and good dry performance as the object of the present invention can be obtained.
(A) The modified conjugated diene polymer and (B) the conjugated diene-aromatic vinyl copolymer thereby produced each preferably have a Mooney viscosity (ML₁₊₄, 100°C) of preferably 10 to 150 or more preferably 15 to 100. When the Mooney viscosity is less than 10, rubber physical properties typified by rupture resistant characteristic cannot be sufficiently obtained. When the Mooney viscosity exceeds 150, workability is poor and it is difficult to knead the components with a blending agent.
In addition, a non-vulcanized rubber composition according to the present invention blended with the components (A) and (B) has a Mooney viscosity (ML₁₊₄, 130°C) of preferably 10 to 150, or more preferably 30 to 100.
The components (A) and (B) used in the rubber composition according to the present invention each have a ratio (Mw/Mn) of a weight-average molecular weight (Mw) to a number-average molecular weight (Mn), i.e., a molecular weight distribution (Mw/Mn) of preferably 1 to 3, or more preferably 1.1 to 2.7.
When the molecular weight distribution (Mw/Mn) of each of the components (A) and (B) is set to fall within the range, blending the components (A) and (B) into the rubber composition never reduces the workability of the rubber composition. As a result, the kneading is facilitated and the physical properties of the rubber composition can be sufficiently improved.

In addition, the components (A) and (B) used in the rubber composition according to the present invention each have a number-average molecular weight (Mn) of preferably 100,000 to 500,000, or more preferably 150,000 to 300,000. Setting the number-average molecular weight of each of the components (A) and (B) within the range suppresses a reduction in elastic modulus of a vulcanized product and an increase in hysteresis loss. As a result, an excellent rupture resistant characteristic is obtained. In addition, excellent kneading workability of the rubber composition containing the components (A) and (B) is obtained. The components (A) and (B) used in the rubber composition according to the present invention must be used as a mixture.

### <Other rubber components>

Rubber components are preferably formed of (A) the modified conjugated diene polymer and (B) the modified conjugated diene-aromatic vinyl copolymer in a total amount of 15 to 100 mass% and at least one kind selected from a natural rubber, a synthetic isoprene rubber, a butadiene rubber, a styrene-butadiene rubber, an ethylene-α-olefin copolymer rubber, an ethylene-α-olefin-diene copolymer rubber, a chloroprene rubber, a halogenated butyl rubber, and a styrene-isobutylene copolymer having a halomethyl group, in an amount of 85 to 0 mass%. In addition, a diene-based modified rubber in which part or the entirety of any other diene-based synthetic rubber has a branched structure as a result of the use of a polyfunctional modifying agent, e.g., a modifying agent such as tin tetrachloride is more preferred.

### <Filler>

The rubber composition according to the present invention contains silica and carbon black at a mass ratio of 10:90 to 80:20 as the filler. This is because of the following reasons. When silica accounts for less than 10 mass% of the total amount of silica and carbon black, wet performance reduces. When silica accounts for more than 80 mass% of the total amount, handling stability reduces -
In addition, it is preferred that: the rubber composition contain silica and carbon black in a total amount of 20 to 120 parts by mass with respect to 100 parts by mass of the rubber component containing (A) the modified conjugated diene polymer and (B) the modified conjugated diene-aromatic vinyl copolymer at a total content of 15 mass% or more; and a content ratio between silica and carbon black be 20:80 to 70:30 in terms of a mass ratio.
No particular limitation is imposed on the type of silica, and any of the silica species conventionally employed as rubber reinforcing fillers may be used.
Examples of the silica include wet silica (hydrous silicic acid), dry silica (anhydrous silicic acid), calcium silicate, and aluminum silicate. of those, wet silica is preferred, because the silica may remarkably improve both fracture characteristics and wet grip performance.

No particular limitation is imposed on the type of carbon black as well, and SRF, GPF, FEF, HAF, 1SAF, SAF, or the like may be employed. The carbon black employed preferably has an iodine adsorption (IA) of 60 mg/g or more and a dibutyl phthalate oil absorption (DBP) of 80 ml/100 g or more. By use of carbon black, dry performance and fracture-resistant characteristics may be greatly improved. From the viewpoint of excellence in wear resistance, HAF, ISAF, and SAF are particularly preferred.
The silica and/or carbon black may be used alone or in combination of two or more kinds thereof.

### <Silane coupling agent>

The silica is used as a reinforcing filler in the rubber composition according to the present invention. Accordingly, a silane coupling agent is desirably blended thereinto for the purpose of further improving the reinforcing property and the low heat generating property.
The silane coupling agent includes, for example, bis(3-triethoxysilylpropyl) tetrasulfide, bis(3-triethoxysilylpropyl) trisulfide, bis(3-triethoxysilylpropyl) disulfide, bis(2-t)ethoxysilylethyl) tetrasulfide, bis(3-trimethoxysi)lpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N, N-dimethylthiocarbamoyl tetrasulfide, 3-triethoxysilylpropyl-N,N-dimethylthiocarbamoyl tetrasulfide, 2-triethoxyselylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. of those, bis(3-triethoxysilylpropyl) polysulfide and 3-trimethoxysilylpropylbenzothiazyl tetrasulfide are suited in terms of an effect of improving the reinforcing property.
Those silane coupling agents maybe used alone or in combination of two or more kinds thereof.

The rubber composition according to the present invention employs, as a rubber component, a modified polymer in which a functional group having a high affinity to silica is introduced into an active site of the molecule thereof. Therefore, the blending amount of the silane coupling agent can be reduced as compared to the general cases. The blending amount of the silane coupling agent, which varies depending on the kind of the agent, is preferably 1 to 20 mass% based on the silica. When the amount is less than 1 mass%, the effect of the coupling agent is unlikely to sufficiently be attained, whereas when the amount is in excess of 20 mass%, the rubber component may be gelated. From the viewpoints of the effect of coupling agent and prevention of gelation, the blending amount of the silane coupling agent is preferably 5 to 15 mass%.

Further, so long as the effect of the present invention is not impeded, the rubber composition according to the present invention may further contain, in accordance with needs, a variety of chemicals usually used in the rubber industry. Examples of the chemicals include a vulcanizing agent, a vulcanization-accelerating agent, a process oil, an antioxidant, a scorch preventive, zinc oxide, and stearic acid.
The vulcanizing agent described above includes sulfur and the like, and the use amount thereof is preferably 0.1 to 10.0 parts by mass, more preferably 1.0 to 5.0 parts by mass in terms of sulfur with respect to 100 parts by mass of the rubber component (A). When the amount is less than 0.1 part by mass, the vulcanized rubber may be reduced in a rapture strength, an abrasion resistance and a low heat generating property. On the other hand, when the amount exceeds 10.0 parts by mass, the excessiveness causes a loss in the rubber elasticity.
The vulcanization-accelerating agent which can be used in the present invention is not specifically restricted, and may include, for example, thiazole-based vulcanization-accelerating agents such as 2-mercaptobenzothiazole (M), dibenzothiazyl disulfide (DM), and N-cyclohexyl-2-benzothiazylsulfenamide (CZ), guanidine-based vulcanization-accelerating agents such as diphenylguanidine (DPG), and thiuram-based vulcanization-accelerating agents such as tetrakis(2-etyhlhexyl)thiuram disulfide (TOT). The use amount thereof is preferably 0.1 to 5.0 parts by mass, more preferably 0.2 to 3.0 parts by mass with respect to 100 parts by mass of the rubber component (A).

The process oil which can be used as a softening agent in the rubber composition according to the present invention includes, for example, a paraffin-based oil, a naphthene-based oil, and an aromatic-based oil. The aromatic-based oil is used for uses in which the tensile strength and the abrasion resistance are regarded as important, and the naphthene-based oil or the paraffin-based oil is used for uses in which the hysteresis loss and the low-temperature characteristic are regarded as important. The use amount thereof is preferably 0 to 100 parts by mass with respect to 100 parts by mass of the rubber component (A), and when the amount is less than 100 parts by mass, deterioration in the tensile strength and the low heat generating property (low fuel consumption) of the vulcanized rubber is suppressed.
Further, an antioxidant that can be used in the rubber composition according to the present invention is, for example, 3C(N-isopropyl-N'-phenyl-p-phenylenediamine, 6C[N-(1,3-dimethylbutyl)-N'-phenyl-p-phenylenediamine], AW(6-ethoxy-2,2,4-trimethyl-1,2-dihydroquinoline), or a high-temperature condensation product of diphenylamine and acetone. The use amount of the antioxidant is preferably 0.1 to 5.0 parts by mass, or more preferably 0.3 to 3.0 parts by mass with respect to 100 parts by mass of the rubber component (A).

### (Preparation of rubber composition, production of tire)

The rubber composition according to the present invention is obtained by kneading according to the blending formulation with a kneading machine such as a Banbury mixer, a roll, or an internal mixer. The composition is subjected to molding, and is then vulcanized. The resultant is used as a tread for a tire, or especially pneumatic tire.
The tire of the present invention is produced by using the rubber composition according to the present invention as a tread according to an ordinary production method for a tire. That is, the rubber composition according to the present invention in which various chemicals are incorporated as described above is processed into each member at its non-vulcanized stage, and is then applied and molded on a tire molding machine by an ordinary method. As a result, a green tire is formed. The green tire is heated and pressurized in a vulcanizer. Thus, the tire is obtained.
The tire of the present invention thus obtained can serve as a tire having good low fuel consumption, good on-ice performance, good wet performance, and good dry performance.

### Examples

Hereinafter, the present invention is described in further details with reference to examples. However, the present invention is by no means restricted by these examples. It should be noted that various kinds of measurement in the examples were conducted by the following methods.
<<Physical properties of unmodified or modified conjugated diene polymer and unmodified or modified conjugated diene-aromatic vinyl copolymer>>
<Method of analyzing microstructure>
A 1,4-cis-bond content and a vinyl bond content (%) were measured by an infrared method (Morello method).
<Measurement of number-average molecular weight (Mn), weight-average molecular weight (Mw), and molecular weight distribution (Mw/Mn)>
The measurement was performed by GPC [manufactured by TOSOH CORPORATION, HLC-8020] with a refractometer as a detector, and the results were represented in terms of polystyrene with monodisperse polystyrene as a standard. It should be noted that a column was a GMHXL [manufactured by TOSOH CORPORATION] and an eluent was tetrahydrofuran.
<Measurement of Mooney viscosity (ML₁₊₄, 100°C)>
Mooney viscosity was determined in accordance with JIS K 6300 (using an L rotor, preheating for one minute, rotor operation for four minutes, and temperature of 100°C).

«Evaluation of characteristic values with vulcanized rubber»
<Handling stability (dry performance)>
A 30°CE' was measured with a spectrometer (dynamic viscoelasticity-measuring tester) manufactured by Toyo Seiki Seisaku-sho, Ltd. at a frequency of 52 Hz, an initial strain of 10%, a measurement temperature of 30°C, and a dynamic strain of 1%, and the result was represented as an index with that of Comparative Example 1 set to 100. The larger the index, the better dry handling stability.
<On-ice performance>
A -20°CE' was measured with a spectrometer (dynamic viscoelasticity-measuring tester) manufactured by Toyo Seiki Seisaku-sho, Ltd. at a frequency of 52 Hz, an initial strain of 10%, a measurement temperature of -20°C, and a dynamic strain of 1%, and the result was represented as an index with the inverse of E' of Comparative Example 1 set to 100. The larger the index, the better on-ice performance.
<Low fuel consumption>
A tanδ was measured with a spectrometer (dynamic viscoelasticity-measuring tester) manufactured by Toyo Seiki Seisaku-sho, Ltd. at a frequency of 52 Hz, an initial strain of 10%, a measurement temperature of 60°C, and a dynamic strain of 1%, and the result was represented as an index with the inverse of tanδ of Comparative Example 1 set to 100. The larger the index, the better low fuel consumption.
<Wet performance>
A tanδ was measured with a spectrometer (dynamic viscoelasticity-measuring tester) manufactured by Toyo Seiki Seisaku-sho, Ltd. at a frequency of 52 Hz, an initial strain of 10%, a measurement temperature of 0°C, and a dynamic strain of 1%, and the result was represented as an index with the inverse of tanδ of Comparative Example 1 set to 100. The larger the index, the better wet performance.

Production Example 1 Primary amine-modified styrene-butadiene rubber (modified SBR-1)
<Synthesis of modifying agent>
Synthesis Example 1: Synthesis of
N,N-bis(trimethylsilyl)aminopropylmethyldiethoxysilane
Under a nitrogen atmosphere, 36 g of 3-aminopropylmethyldiethoxysilane (manufactured by Gelest, Inc.) for forming an aminosilane moiety was added to 400 ml of a dichloromethane solvent placed in a glass flask equipped with an agitator. Subsequently, 48 ml of trimethylsilane chloride (manufactured by Sigma-Aldrich, Inc) and 53 ml of triethylamine for forming a protective moiety were added to the solution, followed by stirring the mixture at room temperature for 17 hours. The reaction mixture was then evaporated by means of an evaporator, to thereby remove solvent from the mixture. The thus-obtained reaction mixture was distilled under reduced pressure (5mm/Hg), to thereby yield 40 g of N,N-bis(trimethylsilyl)aminopropylmethyldiethoxysilane as a 130 to 135°C fraction.
<Synthesis of primary amine-modified styrene-butadiene rubber>
To an autoclave reactor (inner volume: 5L) replaced with nitrogen, 2750 g of cyclohexane, 41.3 g of tetrahydrofuran, 125 g of styrene, and 375 g of 1, 3-butadiene were placed. The temperature of the content of the reactor was adjusted to 10°C, and 215 mg of n-butyllithiumwas added thereto, to thereby initiate polymerization. The polymerization was carried out under adiabatic conditions. The temperature of the polymerization reached 85°C (maximum).
When the polymerization conversion degree reached 99%, additional butadiene (10 g) was added to the polymerization system, followed by polymerization for a further 5 minutes. The resultant polymer solution was removed from the reactor, and a small aliquot of the solution was sampled and added to 30 g of a cyclohexane solution of methanol (1 g). 1129 mg of N,N-bis(trimethylsilyl)aminopropylmethyldiethoxysilane, obtained in Synthesis Example 1, was added thereto, and modification reaction was performed for 15 minutes. Subsequently, 8.11 g of tetrakis(2-ethyl-1,3-hexanediolato)titanium was added to the reaction mixture, followed by stirring for 15 minutes. Finally, after completion of reaction, 2, 6-di-tert-butyl-p-creasol was added thereto. The mixture was subjected to steam stripping, to thereby remove the solvent and deprotect the protected primary amino group. The thus-formed rubber was dried by means of a hot roller (maintained at 110°C), to thereby yield a primary amine-modified styrene-butadiene rubber. The resultant primary amine-modified styrene-butadiene rubber had a bonded styrene amount of 24.5 mass%, a vinyl content in a conjugated diene portion of 56 mol%, and a Mooney viscosity of 32.

### Production Example 2 Amine-modified styrene-butadiene rubber (modified SBR-2)

A modified styrene-butadiene rubber was obtained in the same manner as in Production Example 1 except that N,N-bis(trimethylsilyl)aminopropylmethyldiethoxysilane in Production Example 1 was changed to an equivalent molar amount of N-(1,3-dimethylbutylidene)-3-(triethoxysilyl)-1-propanamine (trade name "SILA-ACE S340", manufactured by CHISSO CORPORATION) The resultant modified styrene-butadiene rubber had a bonded styrene amount of 24.5 mass%, a vinyl content in a conjugated diene portion of 56 mol%, and a Mooney viscosity of 30.

### Production Example 3 Silane-modified styrene-butadiene rubber (modified SBR-3)

A modified styrene-butadiene rubber was obtained in the same manner as in Production Example 1 except that N,N-bis(trimethylsilyl)aminopropylmethyldiethoxysilane in Production Example 1 was changed to an equivalent molar amount of tetraethoxysilane (TEOS). The resultant modified styrene-butadiene rubber had a bonded styrene amount of 24.5 mass%, a vinyl content in a conjugated diene portion of 56 mol%, and a Mooney viscosity of 37.

### Production Example 4 Modified polybutadiene-1 (modified BR-1)

### <Preparation of catalyst>

A glass bottle having a volume of 100 ml which was equipped with a rubber stopper and which was dried and replaced with nitrogen was charged in the following order with 7.11 g of a cyclohexane solution (15.2 mass%) of butadiene, 0.59 ml of a cyclohexane solution (0.56mol/l) of neodymiumneodecanoate, 10. 32 ml of a toluene solution (3.23 mol/l in terms of an aluminum concentration) of methylaluminoxane MAO (PMAO manufactured by Tosoh Akzo Corp.) and 7.77 ml of a hexane solution (0.90 mol/liter) of diisobutylaluminum hydride (manufactured by Kanto Chemical Co., Inc.), and the mixture was ripened at room temperature for 2 minutes. Then, 1.45 ml of a hexane solution (0.95 mol/l) of diethylaluminum chloride (manufactured by Kanto Chemical Co., Inc.) was added thereto, and the solution was ripened at room temperature for 15 minutes while occasionally stirring. A concentration of neodymium contained in the catalyst solution thus obtained was 0.011 mol/l.
<Production of polymer intermediate>
A glass bottle having a volume of about 900 ml which was equipped with a rubber stopper and which was dried and replaced with nitrogen was charged with a cyclohexane solution of butadiene which was dried and refined and dried cyclohexane respectively, to obtain 400 g of a cyclohexane solution of 12.5 mass% of butadiene. Next, 2.28 ml (0.025 mmol in terms of neodymium) of the catalyst solutionprepared in the section (1) was added thereto, and polymerization was carried out in a warm water bath of 50°C for 1.0 hour, thereby producing a polymer intermediate.
<Modification treatment>
A hexane solution having a 3-glycidoxypropyltrimethoxysilane (GPMOS) concentration of 1.0 mol/l was charged into the polymer liquid obtained in the section (2) so that the amount of GPMOS might be 23.5 mole equivalents with respect to neodymium. Then, the mixture was treated at 50°C for 60 minutes.
Next, 1.2 ml of sorbitan trioleic acid ester (manufactured by Kanto Chemical Co., Inc.) were added to the mixture, and furthermore, the whole was subjected to a modification reaction at 60°C for 1 hour. After that, 2 ml of a 5-mass% solution of an antioxidant 2,2'-methylene-bis(4-ethyl-6-t-butylphenol) (NS-5) in isopropanol were added to the polymerization system to terminate the reaction. Further, reprecipitation was carried out in isopropanol containing a trace amount of NS-5, and the precipitated substance was subjected to drum drying. Thus, a modified polybutadine-1 (modified BR-1) was obtained. The modified BR-1 showed no macrogels, and had a Mooney viscosity at 100°C (ML₁₊₄: 100°C) of 59 and a cis-1,4-bond content of 96.8 mol%.

### Production Example 5 Modified polybutadiene-2 (modified BR-2)

Under nitrogen, 1.4 kg of cyclohexane, 250 g of 1, 3-butadiene, and 2,2-ditetrahydrofurylpropane (0.0285 mmol) were loaded into a 5-L autoclave replaced with nitrogen, and 2.85 mmol of n-butyllithium (BuLi) were added to the mixture. After that, the resultant mixture was subjected to polymerization in a warm water bath at 50°C provided with a stirring apparatus for 4.5 hours. The reaction conversion degree of 1, 3-butadiene was substantially 100%. Subsequently, the temperature of the polymer solution was kept at 50°C while the polymerization catalyst was prevented from being deactivated. Then, 1129 mg of the modifying agent N,N-bis(trimethylsilyl)aminopropylmethyldiethoxysilane obtained in Synthesis Example 1 of the above section <Synthesis of modifying agent> were added to carry out a modification reaction for 30 minutes. After that, 2,6-di-tert-butyl-p-cresol was added to the polymer solution. Next, desolvation was performed by steam stripping, and the protected primary amino group was deprotected. Then, the rubber was dried with a heat roll with its temperature adjusted to 110°C. Thus, a modified polybutadine-2 (modified BR-2) was obtained. The resultant modified BR-2 had a cis-1,4-bond content of 40% and a vinyl bond content of 20%.

### Examples 1 to 10 and Comparative Examples 1 to 8

Eighteen kinds of rubber compositions each having blending composition shown in Table 1 were prepared, and eighteen kinds of pneumatic tires for passenger cars (205/55R16) using the eighteen kinds of rubber compositions as their treads were produced. Rubbers sampled from those treads were evaluated for vulcanized rubber physical properties, i.e., dry performance, on-ice performance, low fuel consumption, and wet performance. Table 1 shows the results of the evaluation.

[Table 1]

**Table 1**

| | Example | | | | | | | | | | Comparative Example | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 1 | 2 | 3 | 4 | 5 | 6 | 7 | 8 |
| SBR #1712^{*1} | 82.5 | 82.5 | 82.5 | 82.5 | 82.5 | 82.5 | 82.5 | 82.5 | 82.5 | 82.5 | 82.5 | 82.5 | 82.5 | 82.5 | 82.5 | 82.5 | 82.5 | 82.5 |
| SBR #1500^{*2} | - | - | - | - | - | - | - | - | - | - | 20 | 20 | - | - | 20 | 20 | - | - |
| Modified SBR-1^{*3} | 20 | 20 | 20 | - | - | 20 | 20 | 10 | 30 | 20 | - | - | 20 | 20 | - | - | 20 | 20 |
| Modified SBR-2^{*4} | - | - | - | 20 | - | - | - | - | - | - | - | - | - | - | - | - | - | - |
| Modified SBR-3^{*5} | - | - | - | - | 20 | - | - | - | - | - | - | - | - | - | - | - | - | - |
| BR01^{*6} | - | - | - | - | - | - | - | - | - | - | 20 | - | 20 | - | 20 | - | 20 | - |
| Modified BR-1(GPMOS) | 20 | 20 | 20 | 20 | 20 | 20 | 20 | 30 | 10 | - | - | 20 | - | 20 | - | 20 | - | 20 |
| Modified BR-2 (APMEOS)^{*8} | - | - | - | - | - | - | - | - | - | 20 | - | - | - | - | - | - | - | - |
| A/O MIX oil^{*9} | 11.25 | 11.25 | 11.25 | 11.25 | 11.25 | 11.25 | 11.25 | 11.25 | 11.25 | 11.25 | 11.25 | 11.25 | 11.25 | 11.25 | 11.25 | 11.25 | 11.25 | 11.25 |
| Spindle oil | 10 | 10 | 10 | 10 | 10 | 10 | 10 | 10 | 10 | 10 | 10 | 10 | 10 | 10 | 10 | 10 | 10 | 10 |
| Carbon black^{*10} | 45 | 20 | 80 | 20 | 20 | 72 | 28 | 45 | 45 | 45 | 8 | 8 | 8 | 8 | 45 | 45 | 45 | 82 |
| Silica^{*11} | 45 | 70 | 10 | 70 | 70 | 18 | 62 | 45 | 45 | 45 | 80 | 80 | 80 | 80 | 45 | 45 | 45 | 8 |
| Silane coupling agent^{*12} coupling | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 |
| WAX | 1 | 1 | 1 | 1 | 1 | 1 | 1 | 1 | 1 | 1 | 1 | 1 | 1 | 1 | 1 | 1 | 1 | 1 |
| Antioxidant^{*13} | 1 | 1 | 1 | 1 | 1 | 1 | 1 | 1 | 1 | 1 | 1 | 1 | 1 | 1 | 1 | 1 | 1 | 1 |
| vulcanization-ac celerating agent DPG^{*14} | 1 | 1 | 1 | 1 | 1 | 1 | 1 | 1 | 1 | 1 | 1 | 1 | 1 | 1 | 1 | 1 | 1 | 1 |
| Vulcanization-ac celerating agent CZ^{*15} | 1 | 1 | 1 | 1 | 1 | 1 | 1 | 1 | 1 | 1 | 1 | 1 | 1 | 1 | 1 | 1 | 1 | 1 |
| Vulcanization-ac celerating agent DM^{*16} | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Sul fur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Silica ratio [%]^{*17} | 50.5 | 77.8 | 11.1 | 77.8 | 77.8 | 20.0 | 68.9 | 50.5 | 50.5 | 50.5 | 90.9 | 90.9 | 90.9 | 90.9 | 50.5 | 50.5 | 50.5 | 8.9 |
| Dry performance (Index) | 103 | 100 | 108 | 104 | 105 | 107 | 102 | 104 | 102 | 101 | 100 | 97 | 96 | 93 | 110 | 107 | 106 | 115 |
| Wet performance (Index) | 101 | 103 | 100 | 102 | 103 | 100 | 102 | 100 | 102 | 102 | 100 | 103 | 102 | 104 | 96 | 99 | 98 | 92 |
| On-ice performance (Index) | 105 | 103 | 100 | 101 | 100 | 101 | 104 | 106 | 104 | 106 | 100 | 106 | 102 | 108 | 95 | 101 | 97 | 90 |
| Low heat generating property (Index) | 102 | 106 | 100 | 104 | 103 | 100 | 104 | 101 | 104 | 104 | 100 | 103 | 106 | 110 | 95 | 97 | 100 | 90 |

| | | | | | | | | | | | | | | | | | | |
|---|---|---|---|---|---|---|---|---|---|---|---|---|---|---|---|---|---|---|
| [Remarks] *1. SBR #1712: manufactured by JSR, oil-extended SBR containing 37.5 parts by mass of extender oil, the amount including the extender oil was shown in Table 1. *2. SBR #1500: manufactured by JSR *3. Modified SBR-1: the primary amine-modified styrene-butadiene rubber of Production Example 1 was used. *4. Modified SBR-2: the amine-modified styrene-butadiene rubber of Production Example 2 was used. *5. Modified SBR-3: the silane-modified styrene-butadiene rubber of Production Example 3 was used. *6. BR01: polybutadiene rubber, manufactured by JSR *7. Modified BR-1: the modified polybutadiene-1 of Production Example 4 was used. *8. Modified BR-2: the modified polybutadiene-2 of Production Example 5 was used. *9. A/O MIX oil: manufactured by SANKYO YUKA KOGYO K.K., trade name "A/O MIX" *10. Carbon black: N234, manufactured by TOKAI CARBON CO., LTD., trade name "SEAST HM" *11. Silica: trade name "nipseal AQ", manufactured by Tosoh Silica *12. Silane coupling agent: trade name "Si69", manufactured by Degussa *13. Antioxidant 6PPD: trade name "Nocceler 6C", manufactured by Ouchi Shinko Chemical Industrial Co., Ltd. *14. Vulcanization-accelerating agent DPG: trade name "Nocceler D", manufactured by Ouchi Shinko Chemical Industrial Co., Ltd. *15. Vulcanization-accelerating agent CZ: trade name "Nocceler CZ", manufactured by Ouchi Shinko Chemical Industrial Co., Ltd. *16. Vulcanization-accelerating agent DM: trade name "Nocceler DM", manufactured by Ouchi Shinko Chemical Industrial Co., Ltd. *17. Silica ratio: [amount of silica/amount of (silica+carbon black)]×100 | | | | | | | | | | | | | | | | | | |

As is apparent from Table 1, the dry performance reduces in each of the rubber compositions of Comparative Examples 2 to 4 each having an excessively high silica ratio. The wet performance and the low heat generating property reduce in the rubber composition of Comparative Example 6 obtained by combining the modified polybutadiene rubber and the unmodified styrene-butadiene. The wet performance and the on-ice performance reduce in the rubber composition of Comparative Example 7 obtained by combining the unmodified polybutadiene rubber and the modified styrene-butadiene. Although the dry performance is improved in the rubber composition of Comparative Example 8 having an excessively low silica ratio, the wet performance, the on-ice performance, and the low fuel consumption reduce.
In contrast, each of the rubber compositions of Examples 1 to 10 was the first to be able to achieve the object of the present invention by combining the modified styrene-butadiene rubber, the modified butadiene, and a silica amount and a carbon black amount in preferred ranges.

### Industrial Applicability

The rubber composition according to the present invention can provide tires, or especially various pneumatic tires for automobiles, light cars, light trucks, and trucks and buses, the tires each having good low fuel consumption, good on-ice performance, good wet performance, and good dry performance.

## Claims

1. A tire using a rubber composition, wherein:
the rubber composition contains a rubber component and a filler;
the rubber component contains (A) a modified conjugated diene polymer and (B) a modified conjugated diene-aromatic vinyl copolymer;
a modifying agent used for each of the component (A) and the component (B) comprises (C) a hydrocarbyloxysilane compound containing a nitrogen atom and a silicon atom or (D) a hydrocarbyloxysilane compound containing a silicon atom;
a combination of an unmodified conjugated diene polymer and the modifying agent, and a combination of an unmodified conjugated diene-aromatic vinyl copolymer and the modifying agent comprise any one of the following items 1 to 3:
1: the conjugated diene polymer and the component (C), and the conjugated diene-aromatic vinyl copolymer and the component (D);
2: the conjugated diene polymer and the component (D), and the conjugated diene-aromatic vinyl copolymer and the component (C); and
3: the conjugated diene polymer and the component (C), and the conjugated diene-aromatic vinyl copolymer and the component (C); and
the filler contains silica and carbon black at a mass ratio of 10:90 to 80:20.

2. The tire according to claim 1, wherein the modified conjugated diene polymer as the component (A) and the modified conjugated diene-aromatic vinyl copolymer as the component (B) are each obtained by causing the hydrocarbyloxysilane compound as the component (C) or (D) as a modifying agent to react with an active end of a conjugated diene polymer, or conjugated diene-aromatic vinyl copolymer, having the active end obtained by anionic polymerization of a conjugated diene compound alone, or the conjugated diene compound and an aromatic vinyl compound, in an organic solvent with an organic alkali metal compound as an initiator.

3. The tire according to claim 1, wherein the modified conjugated diene polymer as the component (A) is obtained by causing the hydrocarbyloxysilane compound as the component (C) or (D) as a modifying agent to react with an active end of a conjugated diene polymer having the active end and a cis-1,4-bond content in a conjugated diene portion of its main chain of 90 mol% or more, the conjugated diene polymer being obtained by coordination anionic polymerization of a conjugated diene compound alone or the conjugated diene compound and another conjugated diene compound in an organic solvent with a catalyst containing a lanthanum series rare earth element-containing compound.

4. The tire according to claim 2 or 3, wherein the conjugated diene compound comprises at least one kind selected from 1,3-butadiene, isoprene, and 2,3-dimethyl-1,3-butadiene.

5. The tire according to claim 2, wherein the aromatic vinyl compound comprises styrene.

6. The tire according to claim 2 or 3, wherein the conjugated diene polymer comprises a polybutadiene rubber (BR) and the conjugated diene-aromatic vinyl copolymer comprises a styrene-butadiene rubber (SBR).

7. The tire according to any one of claims 1 to 3, wherein a content of a polymer unit of the aromatic vinyl compound is 5 to 55 mass% of the conjugated diene-aromatic vinyl copolymer and a content of a vinyl bond in the conjugated diene polymer is 7 to 65 mass% of a polymer unit of the conjugated diene.

8. The tire according to any one of claims 1 to 3, wherein the hydrocarbyloxysilane compound as the component (C) comprises at least one kind selected from a hydrocarbyloxysilane compound represented by the following general formula (I) and a partial condensation product of the compound: 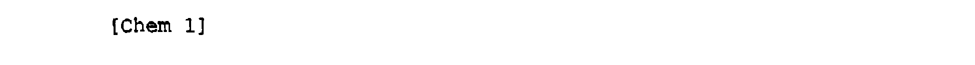 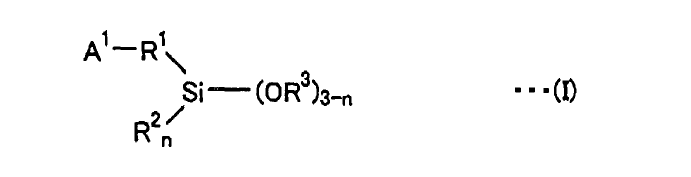 where:
A¹ represents a monovalent group having at least one kind of functional group selected from a cyclic tertiary amino group, a non-cyclic tertiary amino group, an isocyanate group, a thioisocyanate group, an imino group, and a pyridine residue;
R¹ represents a single bond or a divalent inactive hydrocarbon group;
R² and R³ each independently represent a monovalent aliphatic hydrocarbon group having 1 to 20 carbon atoms or a monovalent aromatic hydrocarbon group having 6 to 18 carbon atoms;
n represents an integer of 0 to 2;
when a plurality of OR³'s are present, the plurality of OR³'s may be identical to or different from each other; and
each molecule is free of an active proton and an onium salt.

9. The tire according to any one of claims 1 to 3, wherein the hydrocarbyloxysilane compound as the component (D) comprises at least one kind selected from
a hydrocarbyloxysilane compound represented by the following general formula (II) and a partial condensation product of the compound:
[Chem 2]
R⁴ₚ-Si-(OR⁵)₄₋ₚ (II)
where:
R⁴ and R⁵ each independently represent a monovalent aliphatic hydrocarbon group having 1 to 20 carbon atoms or a monovalent aromatic hydrocarbon group having 6 to 18 carbon atoms;
p represents an integer of 0 to 2;
when a plurality of OR⁵'s are present, the plurality of OR⁵'s may be identical to or different from each other; and
each molecule is free of an active proton and an onium salt,
and
a hydrocarbyloxysilane compound represented by the following general formula (III) and a partial condensation product of the compound: 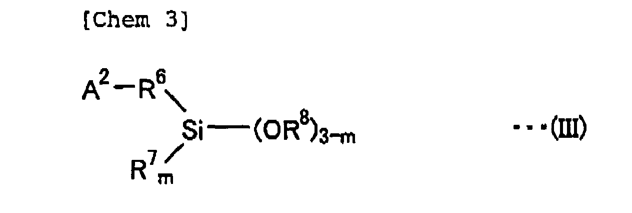 where:
A² represents a monovalent group having at least one kind of functional group selected from an epoxy group, a thioepoxy group, a ketone group, a thioketone group, an aldehyde group, a thioaldehyde group, a trihydrocarbyl isocyanurate residue, a carboxylic acid ester residue, a thiocarboxylic acid ester residue, a carboxylic anhydride residue, a carboxylic halide residue, and a dihydrocarbyl carbonate residue;
R⁶ represents a single bond or a divalent inactive hydrocarbon group;
R⁷ and R⁸ each independently represent a monovalent aliphatic hydrocarbon group having 1 to 20 carbon atoms or a monovalent aromatic hydrocarbon group having 6 to 18 carbon atoms;
m represents an integer of 0 to 2;
when a plurality of OR⁸'s are present, the plurality of OR⁸'s may be identical to or different from each other; and
each molecule is free of an active proton and an onium salt.

10. The tire according to any one of claims 1 to 3, wherein the hydrocarbyloxysilane compound as the component (C) comprises a compound containing a protected primary amino group and a bifunctional silicon atom in which one hydrocarbyloxy group and a reactive group containing one hydrocarbyloxy group are bonded to the same silicon atom in any one of its molecules.

11. The tire according to claim 10, wherein the compound containing a bifunctional silicon atom comprises at least one kind selected from
a silicon compound represented by a general formula (IV): 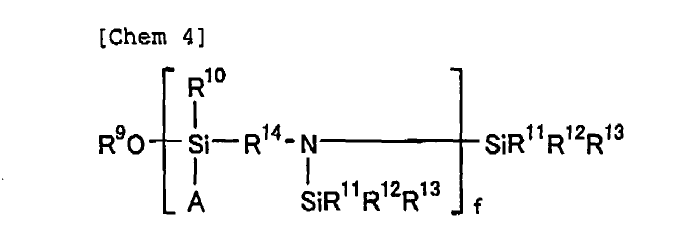 where R⁹ and R¹⁰ each independently represent a hydrocarbon group having 1 to 20 carbon atoms, R¹¹ to R¹³ each independently represent a hydrocarbon group having 1 to 20 carbon atoms, R¹⁴ represents an alkylene group having 1 to 12 carbon atoms, A represents a reactive group, and f represents an integer of 1 to 10,
a silicon compound represented by a general formula (V): 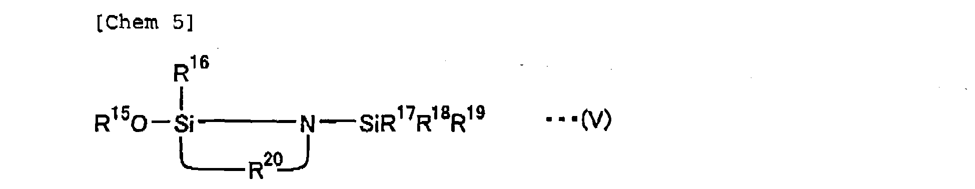 where R¹⁵ to R¹⁹ each independently represent a hydrocarbon group having 1 to 20 carbon atoms, and R²⁰ represents an alkylene group having 1 to 12 carbon atoms, and
a silicon compound represented by a general formula (VI): 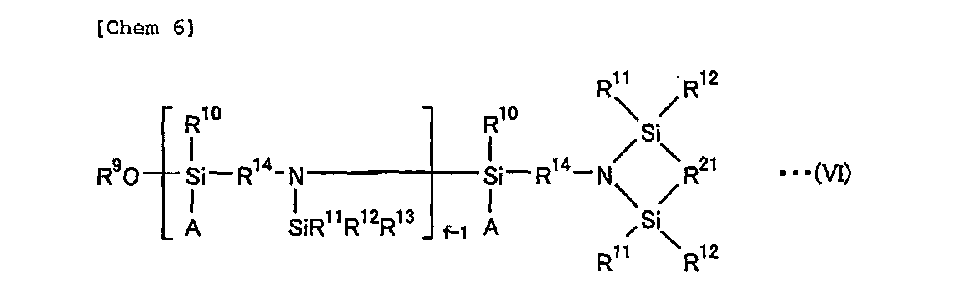 where R⁹ and R¹⁰ each independently represent a hydrocarbon group having 1 to 20 carbon atoms, R¹¹ to R¹³ each independently represent a hydrocarbon group having 1 to 20 carbon atoms, R¹⁴ represents an alkylene group having 1 to 12 carbon atoms, R²¹ represents an alkylene group having 1 to 12 carbon atoms, A represents a reactive group, and f represents an integer of 1 to 10.

12. The tire according to claim 11, wherein A in the general formula (IV) represents a halogen atom or an alkoxy group having 1 to 20 carbon atoms.

13. The tire according to claim 2 or 3, wherein the components (A) and (B) are each obtained by causing the hydrocarbyloxysilane compound as the component (C) or (D) as a modifying agent to react with the active end of the conjugated diene polymer or the conjugated diene-aromatic vinyl copolymer to carry out a modification reaction and subjecting the resultant to a condensation reaction in the presence of a condensation-accelerating agent formed of a compound of an element belonging to any one of Groups 3, 4, 5, 12, 13, 14, and 15 of the periodic table (long-period type).

14. The tire according to claim 13, wherein the condensation-accelerating agent is formed of a compound of titanium (Ti), zirconium (Zr), bismuth (Bi), or aluminum (Al), and the compound of which the condensation-accelerating agent is formed comprises an alkoxide, carboxylate, or acetylacetonato complex salt of the element.

15. The tire according to claim 14, wherein the condensation-accelerating agent comprises at least one kind of titanium-based condensation-accelerating agent selected from an alkoxide, carboxylate, and acetylacetonato complex salt of titanium, or a mixed salt thereof.

16. The tire according to claim 15, wherein the components (A) and (B) are each obtained by causing a compound containing a protected primary amino group and a bifunctional silicon atom in which one hydrocarbyloxy group and a reactive group containing one hydrocarbyloxy group are bonded to the same silicon atom in any one of its molecules to react with a modified active end of the conjugated diene polymer or conjugated diene-aromatic vinyl copolymer having the active end to carry out modification and subjecting the resultant to a condensation reaction in which the bifunctional silicon compound is involved in a presence of a titanium-based condensation-accelerating agent.

17. The tire according to claim 16, wherein the components (A) and (B) are each such that a group derived from the compound containing a bifunctional silicon atom obtained by bonding the compound to the active end of the conjugated diene polymer or the conjugated diene-aromatic vinyl copolymer is further subjected to a hydrolysis treatment so that the protected primary amino group in the group is converted into a free amino group.

18. The tire according to any one of claims 1 to 3, wherein a total blending amount of (A) the modified conjugated diene polymer and (B) the modified conjugated diene-aromatic vinyl copolymer accounts for 15 to 100 mass% of the rubber component, and a blending ratio between the components (A) and (B) is 10:90 to 90:10 in terms of a mass ratio.

19. The tire according to any one of claims 1 to 3, wherein the rubber composition contains silica and carbon black in a total amount of 20 to 120 parts by mass with respect to 100 parts by mass of the rubber component containing (A) the modified conjugated diene polymer and (B) the modified conjugated diene-aromatic vinyl copolymer at a total content of 15 mass% or more, and a content ratio between silica and carbon black is 20:80 to 70:30 in terms of a mass ratio.

20. The tire according to any one of claims 1 to 3, wherein the rubber component comprises (A) the modified conjugated diene polymer and (B) the modified conjugated diene-aromatic vinyl copolymer at a total content of 15 to 100 mass% and at least one kind selected from a natural rubber, a synthetic isoprene rubber, a butadiene rubber, a styrene-butadiene rubber, an ethylene-α-olefin copolymer rubber, an ethylene-α-olefin-diene copolymer rubber, a chloroprene rubber, a halogenated butyl rubber, and a styrene-isobutylene copolymer having a halomethyl group at a content of 85 to 0 mass%.

21. A tire employing the rubber composition according to any one of claims 1 to 3 for a tread.
